# EUROPEAN PATENT APPLICATION

(11) **EP 4 851 683 A1**
(43) Date of publication of application: **09.12.2026**
(21) Application number: 25748437.8
(22) Date of filing: 10.01.2025
(51) Int. Cl.: G02B 5/30, C08F 220/26, C08F 220/30, C08K 5/10, C08L 33/14, C08L 101/06, C09D 7/47, C09D 201/00

(54) **COMPOSITION, FILM, OPTICAL FILM, POLARIZING PLATE, IMAGE DISPLAY DEVICE, POLYMER, COMPOUND**

(30) Priority: 29.01.2024 JP 2024010993
(71) Applicant: FUJIFILM Corporation, Tokyo 106-8620 (JP)
(72) Inventor: HIBINO, Masayuki, Minamiashigara-shi, Kanagawa 250-0193 (JP); MIMURA, Tomonori, Minamiashigara-shi, Kanagawa 250-0193 (JP); TAMURA, Akio, Minamiashigara-shi, Kanagawa 250-0193 (JP); FUKUSHIMA, Yuta, Minamiashigara-shi, Kanagawa 250-0193 (JP)
(74) Representative: HGF
(86) International application number: PCT/JP2025/000628
(87) International publication number: WO 2025/164255

(57) **Abstract**

An object of the present invention is to provide a composition capable of forming a film in which wind unevenness is suppressed. The composition according to the embodiment of the present invention contains a compound having a group represented by Formula (Rs) and a liquid crystal compound.

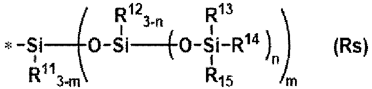

## Description

### BACKGROUND OF THE INVENTION

### 1. Field of the Invention

The present invention relates to a composition, a film, an optical film, a polarizing plate, an image display device, a polymer, and a compound.

### 2. Description of the Related Art

In a case where a composition such as a paint is applied to form a coating film, a leveling agent is added in order to suppress the occurrence of unevenness on the surface of the coating film. The leveling agent can form a smooth surface by reducing the surface tension of the composition and improving the fluidity on the surface.

In order to reduce the surface tension, such a leveling agent is often introduced with a hydrophobic site, and typically, a perfluoroalkyl compound (PFAS) has been used.

In recent years, due to the non-degradability, toxicity, and the like thereof, the regulation of perfluoroalkyl compounds and polyfluoroalkyl compounds (PFAS) has been promoted, and the use of alternatives that do not use a fluorine atom, typically alternative materials containing a silicon atom, has been studied.

For example, WO2023/054164A discloses a liquid crystal composition containing, as a leveling agent containing a silicon atom as described above, a copolymer having two or more repeating units A including two or more structures containing a silicon atom represented by a predetermined formula, and two or more repeating units B having a ring structure consisting of a cycloalkane ring or a monocyclic aromatic ring, in which at least one of the ring structures is a ring structure consisting of a monocyclic aromatic ring.

### SUMMARY OF THE INVENTION

In recent years, there has been a demand in some cases for even higher precision in the surface condition of films. In a case where the leveling agent containing a silicon atom specifically disclosed in the above documents is used, the demand level in the related art is satisfied, but the demand for suppressing wind unevenness at a higher level in recent years is not satisfied, and further improvement is required. The above-described wind unevenness is intended to mean film thickness unevenness caused by wind such as drying after coating.

Therefore, an object of the present invention is to provide a composition capable of forming a film with less wind unevenness.

In addition, another object of the present invention is to provide a polymer having excellent leveling ability, and a compound capable of synthesizing the polymer.

In addition, another object of the present invention is to provide a film, an optical film, a polarizing plate, and an image display device.

As a result of conducting an extensive investigation to achieve the objects, the present inventors have found that the objects can be achieved by the following configuration.
[1] A composition comprising: a compound having a group represented by Formula (Rs); and a liquid crystal compound.
[2] The composition according to [1], in which the compound having the group represented by Formula (Rs) includes a repeating unit represented by Formula (1).
[3] The composition according to [1] or [2], in which the compound having the group represented by Formula (Rs) includes a repeating unit represented by Formula (2).
[4] The composition according to any one of [1] to [3], in which a weight-average molecular weight of the compound having the group represented by Formula (Rs) is 5,000 to 100,000.
[5] The composition according to [2], in which a content of the repeating unit represented by Formula (1) is 30% to 70% by mass with respect to all repeating units of the compound having the group represented by Formula (Rs).
[6] A film formed by immobilizing an alignment state of the liquid crystal compound in the composition according to any one of [1] to [5].
[7] An optical film comprising: the film according to [6].
[8] A polarizing plate comprising: the optical film according to [7]; and a polarizer.
[9] An image display device comprising: the optical film according to [7].
[10] A polymer comprising: a repeating unit represented by Formula (1); and a repeating unit represented by Formula (2), in which a weight-average molecular weight of the polymer is 5,000 to 100,000.
[11] A compound comprising: at least one group selected from the group consisting of a group represented by Formula (Rfc2), a group represented by Formula (Rfc3), and a group represented by Formula (Rfn2).

According to the present invention, it is possible to provide a composition capable of forming a film with less wind unevenness.

In addition, according to the present invention, it is also possible to provide a polymer having an excellent leveling ability, and a compound capable of synthesizing the polymer.

In addition, according to the present invention, it is also possible to provide a film, an optical film, a polarizing plate, and an image display device.

### DESCRIPTION OF THE PREFERRED EMBODIMENTS

Hereinafter, the present invention will be described in detail.

The description of the configuration requirements described below may be made based on the representative embodiments of the present invention, but the present invention is not limited to those embodiments.

In the present specification, a numerical range expressed using "to" means a range that includes the preceding and succeeding numerical values of "to" as a lower limit value and an upper limit value, respectively.
In addition, in the present specification, in a case where there are two or more components corresponding to a certain component, "content" of such a component means the total content of the two or more components.
In the present specification, regarding numerical ranges that are described stepwise, an upper limit value or a lower limit value described in a numerical range may be replaced with an upper limit value or a lower limit value of another stepwise numerical range. In addition, in the numerical range described in the present specification, an upper limit value and a lower limit value described in a certain numerical range may be replaced with values shown in Examples.
In the present specification, a combination of two or more preferred aspects is a more preferred aspect.

In the present specification, in a case where there are a plurality of substituents, linking groups, and the like (hereinafter, referred to as substituents and the like) represented by a specific reference numeral, or in a case where a plurality of substituents and the like are defined at the same time, unless otherwise specified, it means that the substituents and the like may be the same or different from each other. The same applies to the definition of the number of substituents or the like.

A bonding direction of a divalent group (for example, -CO-O-) described in the present specification is not limited unless otherwise specified. For example, in a case where Y in a compound represented by a formula "X-Y-Z" is -CO-O-, the compound may be "X-O-CO-Z" or "X-CO-O-Z".

In the present specification, the term "(meth)acryl" is a concept including both acryl and methacryl, the term "(meth)acryloyl" is a concept including both acryloyl and methacryloyl, the term "(meth)acrylate" is a concept including both acrylate and methacrylate, and the term "(meth)acrylamide" is a concept including both acrylamide and methacrylamide.

In the present specification, the slow axis is defined at 550 nm unless otherwise specified.

In addition, in the present specification, a relationship between angles (for example, "orthogonal", "parallel", and the like) is intended to include a range of errors acceptable in the art to which the present invention belongs. Specifically, it means that an angle is within an error range of less than ± 10° with respect to the exact angle, and the error with respect to the exact angle is preferably within a range of ± 5° or less and more preferably within a range of ± 3° or less.

In the present specification, the solid content is intended to be a component forming a film, and does not include a solvent. Even in a case where a component is liquid, the component is considered to be a solid content as long as the component forms the film.

### [Composition]

Hereinafter, the composition according to an embodiment of the present invention will be described in more detail.

The composition according to the embodiment of the present invention contains a compound having a group represented by Formula (Rs) (hereinafter, also referred to as a "specific compound") and a liquid crystal compound.

Although the reason why the composition having the above-mentioned configuration can achieve the objects of the present invention is not always clear, the present inventors speculate as follows.
The mechanism by which the effect is obtained is not limited by the following speculation. In other words, even in a case where the effect is obtained by a mechanism other than the one described below, it is still included within the scope of the present invention.

The specific compound has a multibranched specific silicon-containing group having four or more terminal silyl groups. Since the silicon-containing group has high hydrophobicity, it is presumed that the specific compound has excellent leveling ability, and wind unevenness of a film formed of a composition containing the specific compound can be suppressed.

Hereinafter, the fact that a film in which wind unevenness is further suppressed can be formed from the composition is also simply referred to as "the effect of the present invention is more excellent".

### [Specific compound]

The specific compound is a compound having a group represented by Formula (Rs).

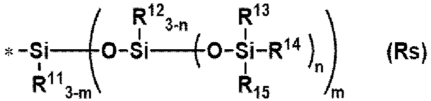

In Formula (Rs), R¹¹ and R¹² each independently represent a hydrogen atom, an alkyl group, or an aryl group.

The above-described alkyl group may be linear, branched, or cyclic.

The number of carbon atoms in the linear alkyl group is preferably 1 to 18, more preferably 1 to 6, and still more preferably 1 to 3. In addition, the number of carbon atoms in the branched or cyclic alkyl group is preferably 3 to 18, more preferably 3 to 12, and still more preferably 3 to 6.

Specific examples of the alkyl group include a methyl group, an ethyl group, a propyl group, a butyl group, an isopropyl group, a tert-butyl group, and a cyclohexyl group.

The number of carbon atoms in the above-described aryl group is preferably 6 to 12.

R¹¹ and R¹² are preferably an alkyl group, more preferably a linear alkyl group having 1 to 6 carbon atoms or a branched alkyl group having 3 to 6 carbon atoms, and still more preferably a linear alkyl group having 1 to 3 carbon atoms.

In Formula (Rs), R¹³, R¹⁴, and R¹⁵ each independently represent an alkyl group or an aryl group.

The suitable embodiments of the alkyl groups and aryl groups represented by R¹³, R¹⁴, and R¹⁵ are the same as those of the alkyl groups and aryl groups represented by R¹¹ and R¹².

From the viewpoint that the wind unevenness can be further suppressed, it is preferable that all of R¹³, R¹⁴, and R¹⁵ are alkyl groups.

In Formula (Rs), n's each independently represent 2 or 3, and preferably 2.

m represents 2 or 3, and preferably 2.

* represents a bonding position.

The number of groups represented by Formula (Rs) included in the specific compound is 1 or more, and more preferably 2 or more.

The specific compound preferably has, as a structure including a group represented by Formula (Rs), at least one group selected from the group consisting of a group represented by Formula (Rfc1), a group represented by Formula (Rfc2), a group represented by Formula (Rfc3), a group represented by Formula (Rfn1), and a group represented by Formula (Rfn2).

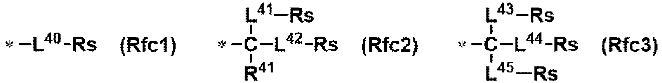

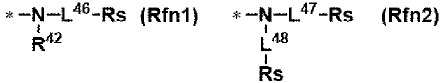

In Formula (Rfc1), Formula (Rfc2), Formula (Rfc3), Formula (Rfn1), and Formula (Rfn2), L⁴⁰, L⁴¹, L⁴², L⁴³, L⁴⁴, L⁴⁵, L⁴⁶, L⁴⁷, and L⁴⁸ each independently represent a divalent linking group.

Examples of the above-described divalent linking group include a divalent aliphatic hydrocarbon group. One or more of -CH₂-'s constituting the above-described divalent aliphatic hydrocarbon group may be each independently substituted with a group selected from -O-, -S-, -CO-, -SiR^{si}₂, and -N(Q)-. Two or more of a plurality of -CH₂-'s may be substituted as long as the same group is not adjacent. R^{Si} each independently represent a hydrogen atom or a substituent. Examples of the substituent represented by R^{Si} include an alkyl group, an aryl group, and -O-Rs. Rs represents a group represented by Formula (Rs). Suitable aspects of the above-described alkyl group and aryl group are the same as the group represented by R¹³ to R¹⁵ in Formula (Rs). R^{Si} is preferably a methyl group or -O-Rs. Q represents a substituent, and is preferably an alkyl group, more preferably a linear alkyl group having 1 to 4 carbon atoms, and still more preferably a methyl group or an ethyl group.

The above-described divalent aliphatic hydrocarbon group may be any of linear, branched, or cyclic, and is preferably linear or branched.

The number of carbon atoms in the above-described divalent linear aliphatic hydrocarbon group is preferably 1 to 20, more preferably 1 to 15, and still more preferably 1 to 10. In addition, the number of carbon atoms in the above-described branched or cyclic aliphatic hydrocarbon group is preferably 3 to 20 and more preferably 3 to 15.

Among these, the preferred options for L⁴⁰ to L⁴⁸ are *-Al¹-*, *-Al²-O-Al³-*, *-Al¹-SiR¹⁶₂₋ₜ(O-Rs)ₜ-O-*^{Rs}, or *-Al²-O-Al³-SiR¹⁶₂₋ₜ(O-Rs)ₜ-O-*^{Rs}.

Al¹ to Al³ each independently represent an alkylene group or an alkenylene group.

Al¹ is preferably a linear alkylene group having 1 to 10 carbon atoms or a branched alkylene group or a branched alkenylene group having 3 to 15 carbon atoms, and more preferably a linear alkylene group having 1 to 10 carbon atoms or a branched alkylene group having 3 to 10 carbon atoms.

As Al² and Al³, a linear alkylene group having 1 to 10 carbon atoms is preferable, and a linear alkylene group having 1 to 4 carbon atoms is more preferable.

R¹⁶ each independently represent a hydrogen atom, an alkyl group, or an aryl group. The definition and suitable aspect of the group represented by R¹⁶ are the same as those of the group represented by R¹¹ and R¹² in Formula (Rs).

t represents an integer of 0 to 2, preferably 1 or 2 and more preferably 1.

* represents a bonding position, and *^{Rs} represents a bonding position to the group represented by Rs.

As L⁴⁶ to L⁴⁸, *^{N}-SiR^{Si}₂-Al⁴-* is preferable.

Al⁴ represents an alkylene group or an alkenylene group, and is preferably a linear alkylene group having 1 to 10 carbon atoms and more preferably a linear alkylene group having 2 to 4 carbon atoms.

R^{Si} is as described above, and is preferably an alkyl group or an aryl group.

*^{N} represents a bonding position to a nitrogen atom specified in the formula.

In Formula (Rfc1), Formula (Rfc2), Formula (Rfc3), Formula (Rfn1), and Formula (Rfn2), Rs' s each independently represent the group represented by Formula (Rs) described above.

In Formula (Rfc2), R⁴¹ represents a hydrogen atom, an alkyl group, or an aryl group.

The above-described alkyl group may be linear, branched, or cyclic, and is preferably linear.

The number of carbon atoms in the linear alkyl group is preferably 1 to 18, more preferably 1 to 6, and still more preferably 1 to 3. In addition, the number of carbon atoms in the branched or cyclic alkyl group is preferably 3 to 18, more preferably 3 to 12, and still more preferably 3 to 6.

The number of carbon atoms in the above-described aryl group is preferably 6 to 12.

R⁴¹ is preferably a hydrogen atom or an alkyl group, and more preferably a hydrogen atom or a linear alkyl group having 1 to 3 carbon atoms.

In Formula (Rfn1), R⁴² represents a hydrogen atom, an alkyl group, an alkenyl group, or an aryl group, preferably a hydrogen atom or an alkyl group, more preferably a hydrogen atom or a linear alkyl group having 1 to 4 carbon atoms, still more preferably a hydrogen atom, a methyl group, or an ethyl group, and particularly preferably a hydrogen atom or a methyl group.

In particular, from the viewpoint that the effect of the present invention is more excellent, the specific compound preferably includes at least one group selected from the group consisting of a group represented by Formula (Rfc2), a group represented by Formula (Rfc3), and a group represented by Formula (Rfn2), and more preferably includes at least one group selected from the group consisting of a group represented by Formula (Rfc2) and a group represented by Formula (Rfc3).

From the viewpoint that the effect of the present invention is more excellent, the specific compound is preferably a polymer, and more preferably a polymer having a repeating unit including a group represented by Formula (Rs).

### <Repeating unit represented by Formula (1)>

As the repeating unit including a group represented by Formula (Rs), a repeating unit represented by Formula (1) is preferable.

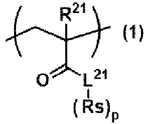

In Formula (1), R²¹ represents a hydrogen atom or a methyl group.

From the viewpoint of more excellent compatibility, R²¹ is preferably a methyl group.

In Formula (1), L²¹ represents a (p+1)-valent linking group.

Suitable examples of the (p+1)-valent linking group include a (p+1)-valent hydrocarbon group having 1 to 30 carbon atoms, which may have a substituent, in which a part of carbon atoms constituting the hydrocarbon group may be substituted with a heteroatom.

Examples of the heteroatom which may substitute a part of the carbon atoms include a silicon atom, an oxygen atom, a nitrogen atom, a boron atom, a phosphorus atom, and a gallium atom, and a silicon atom, an oxygen atom, or a nitrogen atom is preferable.

In the (p+1)-valent linking group represented by L²¹, it is preferable that an atom adjacent to -CO- specified in Formula (1) is a heteroatom, and it is more preferable that the atom is an oxygen atom or a nitrogen atom.

In Formula (1), Rs each independently represent a group represented by Formula (Rs).

In Formula (1), p represents an integer of 1 or more.

From the viewpoint that the effect of the present invention is more excellent, p is preferably an integer of 2 or more, and the upper limit of p is not particularly limited, but is preferably 8 or less and more preferably 6 or less.

The repeating unit represented by Formula (1) is preferably a repeating unit represented by Formula (1A) or a repeating unit represented by Formula (1B), and from the viewpoint that the compatibility with the liquid crystal compound is more excellent and a film in which the wind unevenness is further suppressed can be formed, a repeating unit represented by Formula (1A) is more preferable.

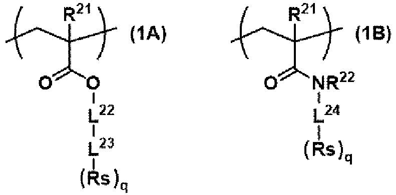

In Formulae (1A) and (1B), L²³ and L²⁴ each independently represent a (q+1)-valent linking group.

Suitable examples of the (q+1)-valent linking group include a (q+1)-valent hydrocarbon group having 1 to 30 carbon atoms, which may have a substituent, in which a part of carbon atoms constituting the hydrocarbon group may be substituted with a heteroatom.

Examples of the heteroatom which may substitute a part of the carbon atoms include a silicon atom, an oxygen atom, a nitrogen atom, a boron atom, a phosphorus atom, and a gallium atom, and a silicon atom, an oxygen atom, or a nitrogen atom is preferable.

In Formulae (1A) and (1B), Rs and R²¹ each have the same meanings as Rs and R²¹ in Formula (1).

In Formulae (1A) and (1B), q's each independently represent an integer of 1 or more, and the upper limit of q is not particularly limited, and examples thereof include an integer of 5 or less, and an integer of 3 or less is preferable.

In Formula (1A), L²² represents a single bond or an alkylene group.

The alkylene group is preferably a linear alkylene group having 1 to 3 carbon atoms, and more preferably a methylene group.

In Formula (1B), R²² represents a hydrogen atom or a substituent.

Examples of the substituent include an alkyl group, an alkenyl group, an aryl group, and -L²⁴-(Rs)_{q}. The definitions of L²⁴, Rs, and q are each the same as the definitions in Formula (1B).
As R²², a hydrogen atom, an alkyl group, or -L²⁴-(Rs)_{q} is preferable, and a -L²⁴-(Rs)_{q} is more preferable.

In Formula (1A), from the viewpoint that the effect of the present invention is more excellent, the group represented by -L²³-(Rs)_{q} is preferably a group represented by Formula (Rfc1), a group represented by Formula (Rfc2), or a group represented by Formula (Rfc3), and more preferably a group represented by Formula (Rfc2) or a group represented by Formula (Rfc3).

In Formula (1B), from the viewpoint that the effect of the present invention is more excellent, the group represented by -NR²¹-L²⁴-(Rs)_{q} is preferably a group represented by Formula (Rfn1) or a group represented by Formula (Rfn2), and more preferably a group represented by Formula (Rfn2).

Specific examples of the repeating unit represented by Formula (1) include the following structures.

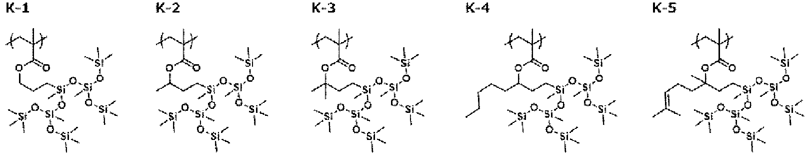

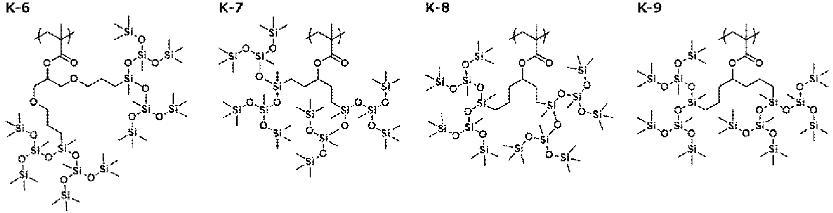

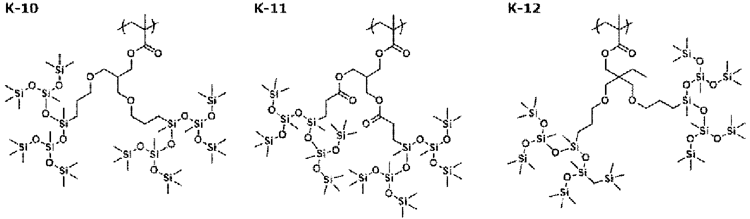

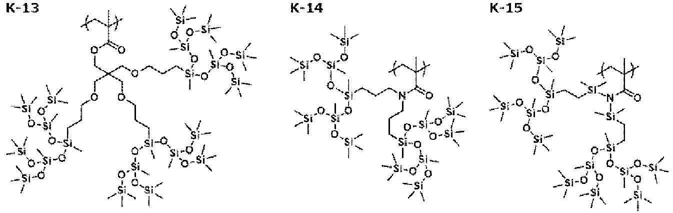

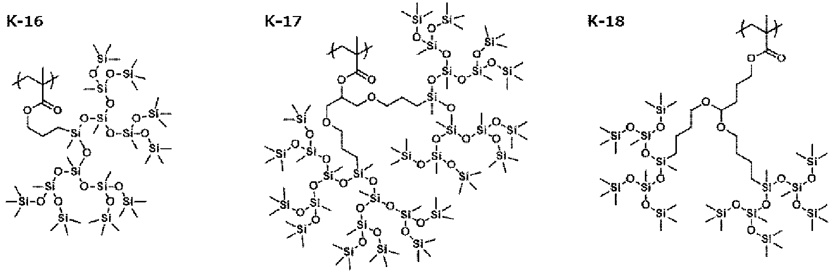

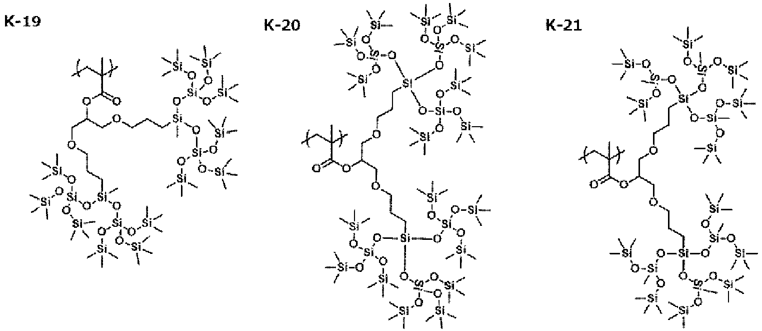

The repeating unit represented by Formula (1) may be used alone or in combination of two or more kinds thereof.

From the viewpoint that the effect of the present invention is more excellent, a content of the repeating unit represented by Formula (1) is preferably 20% to 80% by mass and more preferably 30% to 70% by mass with respect to all repeating units of the specific compound.

### <Repeating unit represented by Formula (2)>

From the viewpoint that the compatibility in the composition is more excellent, the specific compound preferably has a repeating unit represented by Formula (2).

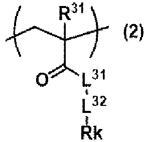

In Formula (2), R³¹ represents a hydrogen atom or a methyl group, and from the viewpoint of more excellent compatibility, a methyl group is preferable.

In Formula (2), L³¹ represents -O- or -NR^{N}-. R^{N} represents a hydrogen atom or a substituent.
Examples of the substituent represented by R^{N} include an alkyl group, an alkenyl group, and an aryl group, among which an alkyl group is preferable, a linear alkyl group having 1 to 4 carbon atoms is more preferable, and a methyl group or an ethyl group is still more preferable.

L³¹ is preferably -O- or -NH-, and more preferably -O-.

In Formula (2), L³² represents a single bond or a divalent linking group.

Examples of the above-described divalent linking group include a divalent aliphatic hydrocarbon group having 1 to 20 carbon atoms, which may have a substituent.

The aliphatic hydrocarbon group having 1 to 20 carbon atoms is preferably an alkylene group having 1 to 15 carbon atoms and more preferably an alkylene group having 2 to 8 carbon atoms.

One or more of -CH₂-'s constituting the above-described divalent aliphatic hydrocarbon group may be each independently substituted with a group selected from -O-, -S-, -CO-, and -N(Q)-. Two or more of a plurality of -CH₂-'s may be substituted as long as the same group is not adjacent. Q is as described above.

In Formula (2), Rk represents a group selected from the group consisting of a group having a ring structure, a group having a poly(alkyleneoxy) group, and a hydroxyl group, and from the viewpoint of more excellent compatibility and aligning properties of the liquid crystal compound, a group having a ring structure is preferable.

### (Group having ring structure)

Examples of the ring in the group having a ring structure include an aromatic ring and a non-aromatic ring, and an aromatic ring is preferable. The above-described ring may be a monocycle or a polycycle.

The above-described aromatic ring may be any of an aromatic hydrocarbon ring or an aromatic heterocyclic ring.

Examples of the aromatic hydrocarbon ring include a benzene ring, a naphthalene ring, an anthracene ring, and a phenanthrene. Examples of the aromatic heterocyclic ring include a pyridine ring, a pyridazine ring, an imidazole ring, a thiophene ring, a quinoline ring, an isoquinolylene ring, a phenanthroline ring, an oxazole ring, a thiazole ring, an oxadiazole ring, a benzothiazole ring, a benzothiadiazole ring, a phthalimide ring, a thienothiazole ring, a thiazolothiazole ring, a thienothiophene ring, and a thienooxazole ring. Among these, a benzene ring is preferable as the aromatic ring.

The non-aromatic ring may be any of an alicyclic hydrocarbon ring or an alicyclic heterocyclic ring.
Examples of the alicyclic hydrocarbon ring include a cyclopentane ring, a cyclohexane ring, a cycloheptane ring, a cyclooctane ring, a cyclononane ring, a cyclododecane ring, and a cyclodocosane ring. As the alicyclic heterocyclic ring, a pyrrolidine ring, an oxolane ring, a thiolane ring, a piperidine ring, a tetrahydropyran ring, a thiane ring, a piperazine ring, and a morpholine ring are included as examples. Among these, a cyclohexane ring is preferable as the non-aromatic ring.

The ring may have a substituent. Examples of the substituent which may be included in the ring include an alkyl ester group, an alkyl group which may have a halogen atom, an acyl group, an alkoxy group, an alkylthio group, an alkyloxycarbonyl group, a carbamoyl group, an acylamino group, a halogen atom, a cyano group, and a nitro group. Among these, an alkyl ester group, an alkyl group, or an acyl group is preferable, a methyl ester group, a linear alkyl group having 1 to 4 carbon atoms, or an acetyl group is more preferable, and a methyl ester group, a methyl group, or an ethyl group is still more preferable.

The number of rings included in the group having a ring structure is 1 or more, preferably 1 to 6 and more preferably 2 to 4.

Examples of the group having a ring structure include a mesogen group.

As the above-described mesogen group, a known mesogen group can be used, and for example, "Flussige Kristalle in Tabellen II" (VEB Deutsche Verlag fur Grundstoff Industrie, Leipzig, 1984), particularly the description on pages 7 to 16, and "Liquid Crystal Handbook" (Maruzen, 2000), particularly the description in Chapter 3, edited by the Liquid Crystal Handbook Editing Committee, can be referred to.

From the reason that the aligning properties of the liquid crystal compound is improved, the mesogen group is preferably a group having an aromatic hydrocarbon group or a group having an alicyclic group, which may have a substituent, more preferably a group having 2 to 4 aromatic hydrocarbon groups, which may have a substituent, and still more preferably a group having 3 aromatic hydrocarbon groups, which may have a substituent. The substituent is preferably an alkyl group, an alkoxy group, an alkyl ester group, or an acetyl group, and more preferably a methyl group, a tert-butyl group, a methoxy group, or a methyl ester group.

The group having a ring structure preferably includes a group represented by Formula (M1-A).

*-(Cy¹¹-L¹¹)ₐ-Cy¹²-* (M1-A)

In Formula (M1-A), * represents a bonding position.

In Formula (M1-A), a represents an integer of 1 or more, and is preferably an integer of 1 to 10, more preferably an integer of 1 to 3, and still more preferably 2.

In Formula (M1-A), Cy¹¹ and Cy¹² each independently represent a divalent ring group which may have a substituent.

The divalent ring group may be any of a monocyclic ring or a polycyclic ring, and is preferably a monocyclic ring.

The number of ring members in the divalent ring group is preferably 5 to 18, more preferably 5 to 10, and still more preferably 5 or 6.

Examples of the divalent ring group include a group obtained by removing two hydrogen atoms from the ring described as the ring in the group having a ring structure described above.

In Formula (M1-A), L¹¹'s each independently represent a single bond or a divalent linking group.

Examples of the divalent linking group include -CO-, -O-, -S-, -C(=S)-, -CR^{L1}R^{L2}-, -CR^{L3}=CR^{L4}-, and -NR^{L5}-, and a combination of two or more of these groups. R^{L1} to R^{L5} each independently represent a hydrogen atom or a substituent. As the substituent represented by R^{L1} to R^{L5}, a halogen atom, an alkyl group having 1 to 12 carbon atoms, or an alkoxy group having 1 to 12 carbon atoms is preferable.

L¹¹ is preferably -CO-, -O-, -CR^{L1}R^{L2}-, -NR^{L5}-, or a combination of two of these groups.

In a case where a is an integer of 2 or more and Cy¹¹ represents a phenylene group, from the viewpoint of improving aligning properties in a case of horizontally aligning the liquid crystal compound, any one of two or more Cy¹¹'s is preferably linked at a meta position or an ortho position, and more preferably linked at a meta position. On the other hand, in a case where the liquid crystal compound is vertically aligned, in any one of two or more Cy¹¹, a para position linkage is preferable.

In a case where Rk is a group having a ring structure, from the viewpoint of improving compatibility with the liquid crystal compound and viewpoint of further suppressing wind unevenness, the repeating unit represented by Formula (2) is preferably a repeating unit represented by Formula (b1) or a repeating unit represented by Formula (b2), and more preferably a repeating unit represented by Formula (b1).

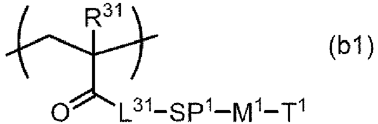

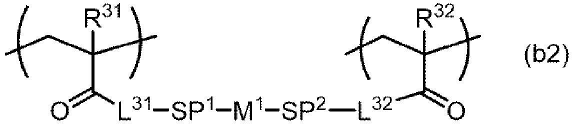

In Formula (b1) and Formula (b2), R³¹ and L³¹ respectively have the same meanings as R³¹ and L³¹ in Formula (2).

In Formula (b2), R³² has the same definition as R³¹ in Formula (2), and a suitable aspect thereof is also the same. In Formula (b2), L³² has the same definition as L³¹ in Formula (2), and a suitable aspect thereof is also the same.

In Formulae (b1) and (b2), SP¹ and SP² each independently represent a spacer group.

The spacer group is not particularly limited as long as it is a divalent linking group not including a ring structure, and examples thereof include a divalent chain-like aliphatic hydrocarbon group having 1 to 20 carbon atoms.

As the divalent chain-like aliphatic hydrocarbon group having 1 to 20 carbon atoms, a chain-like alkylene group having 1 to 15 carbon atoms is preferable, and a chain-like alkylene group having 1 to 8 carbon atoms is more preferable. Specific suitable examples thereof include a methylene group, an ethylene group, a propylene group, a butylene group, a pentylene group, a hexylene group, a methylhexylene group, and a heptylene group.

One or more of -CH₂-'s constituting the divalent chain-like aliphatic hydrocarbon group may be each independently substituted with a group selected from -O-, -S-, -CO-, and -N(Q)-. Two or more of -CH₂-'s may be substituted as long as the same group is not adjacent. Q is as described above.

Among these, as the spacer group, *-(CH₂-CH₂-O)ₙ₁-*, *-(CH₂)ₙ₂-O-*, or *-(CH₂)ₙ₂-O-CO-* is preferable, * represents a bonding position, n1 represents an integer of 1 to 4, and n2's each independently represent an integer of 1 to 6 and are preferably an integer of 2 to 4.

In Formula (b1) and Formula (b2), M¹ represents a mesogen group. The details of the mesogen group are as described above.

In Formula (b2), T¹ represents a terminal group. The terminal group represents a hydrogen atom or a substituent.

Examples of the substituent include a halogen atom, a cyano group, a nitro group, a hydroxy group, an alkyl group having 1 to 10 carbon atoms, an alkoxy group having 1 to 10 carbon atoms, an alkylthio group having 1 to 10 carbon atoms, an alkoxycarbonyloxy group having 1 to 10 carbon atoms, an alkoxycarbonyl group having 1 to 10 carbon atoms (ROC(O)-: R represents an alkyl group), an acyloxy group having 1 to 10 carbon atoms, an acylamino group having 1 to 10 carbon atoms, an alkoxycarbonylamino group having 1 to 10 carbon atoms, a sulfonylamino group having 1 to 10 carbon atoms, a sulfamoyl group having 1 to 10 carbon atoms, a carbamoyl group having 1 to 10 carbon atoms, a sulfinyl group having 1 to 10 carbon atoms, a trialkylsilyloxy group having 3 to 12 carbon atoms, and a ureido group having 1 to 10 carbon atoms.

### (Group having poly(alkyleneoxy) group)

The poly(alkyleneoxy) group is a group in which two or more alkyleneoxy groups are linked. Specific examples of the group having a poly(alkyleneoxy) group include a group represented by -(Al-O)ₖ-R^{AO}.

Al's each independently represent an alkylene group. The alkylene group may be linear, branched, or cyclic, and is preferably linear or branched, and more preferably linear.

The number of carbon atoms in the alkylene group is preferably 1 to 6, more preferably 2 to 4, and still more preferably 2 or 3. Two or more Al's may be the same or different from each other. For example, the poly(alkyleneoxy) group may be a group having both an ethylene oxide unit and a propylene oxide unit.

k represents an integer of 2 or more, and is preferably an integer of 2 to 150 and more preferably an integer of 2 to 30.

R^{AO} represents a hydrogen atom or a substituent.

Specific examples of the substituent include an aliphatic hydrocarbon group which may have a substituent and an aromatic ring group which may have a substituent.

Examples of the above-described aliphatic hydrocarbon group include an alkyl group, an alkenyl group, and an alkynyl group; and an alkyl group is preferable. In addition, the aliphatic hydrocarbon group may be linear, branched, or cyclic, and is preferably linear or branched.

The number of carbon atoms in the aliphatic hydrocarbon group is preferably 1 to 30, more preferably 1 to 20, and still more preferably 1 to 3.

The above-described aromatic ring group may be an aromatic hydrocarbon ring group or an aromatic heterocyclic group, and an aromatic hydrocarbon ring group is preferable. Examples of the aromatic ring constituting the aromatic ring group include the aromatic rings exemplified in the group having a ring structure described above. Among these, a phenyl group is preferable as the aromatic ring group.

Examples of the substituent which may be included in the aliphatic hydrocarbon group and the aromatic ring group include an alkyl ester group, an alkyl group which may have a halogen atom, an acyl group, an alkoxy group, an alkylthio group, an alkyloxycarbonyl group, a carbamoyl group, an acylamino group, a halogen atom, a cyano group, and a nitro group, and an alkyl ester group, an alkyl group, or an acyl group is preferable.

In a case where R^{AO} represents a hydrogen atom, the group represented by Rk has a hydroxyl group, but corresponds to a group having a poly(alkyleneoxy) group.

In a case where Rk is a group having a poly(alkyleneoxy) group, it is preferable that L³² in Formula (2) is a single bond.

Specifically, in a case where Rk is a group having a poly(alkyleneoxy) group, the repeating unit represented by Formula (2) is preferably a repeating unit represented by Formula (c1).

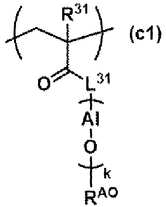

In Formula (c1), R³¹ and L³¹ respectively have the same meanings as R³¹ and L³¹ in Formula (2).
Al, k, and R^{AO} are as described above.

### (Hydroxyl group)

In a case where Rk is a hydroxyl group, L³² is preferably an alkylene group having 1 to 15 carbon atoms and more preferably an alkylene group having 2 to 8 carbon atoms.

In a case where Rk is a hydroxyl group, examples of the repeating unit represented by Formula (2) include a repeating unit represented by Formula (h1).

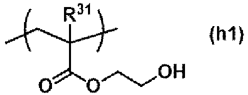

In Formula (h1), R³¹ has the same meaning as R³¹ in Formula (2).

Specific examples of the repeating unit represented by Formula (2) include the following repeating units. In the formulae, n3 and m3 represent the number of repeating units.

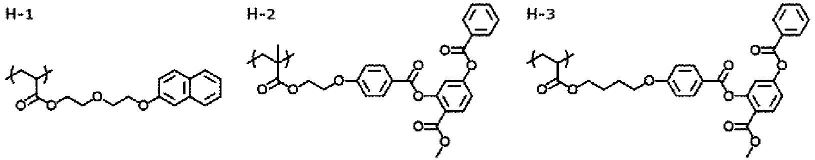

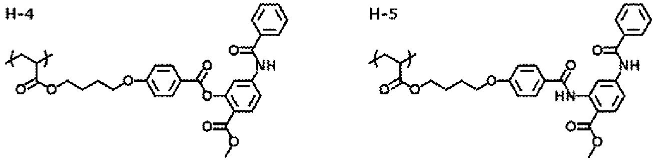

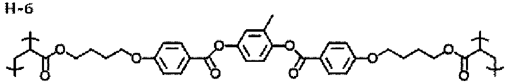

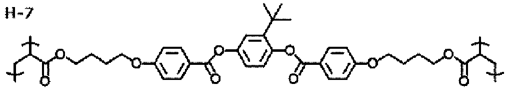

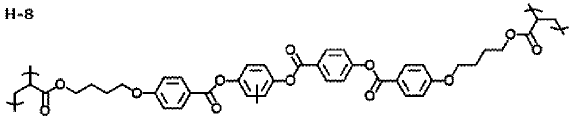

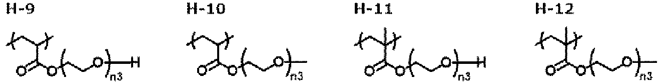

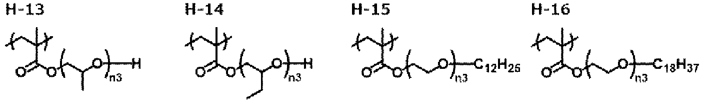

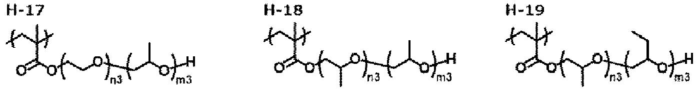

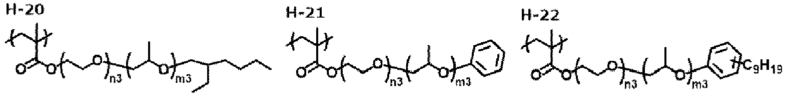

The repeating unit represented by Formula (2) may be used alone or in combination of two or more kinds thereof.

A content of the repeating unit represented by Formula (2) is preferably 20% to 80% by mass and more preferably 30% to 70% by mass with respect to all repeating units of the specific compound.

In addition, from the viewpoint that the aligning properties of the liquid crystal compound are more excellent, a content of the repeating unit represented by Formula (2) in which Rk is a group having a ring structure is preferably 50% by mass or more and more preferably 80% by mass or more with respect to the repeating unit represented by Formula (2). The upper limit is not particularly limited and may be 100% by mass.

A total content of the repeating unit represented by Formula (1) and the repeating unit represented by Formula (2) is preferably 60% by mass or more, more preferably 80% by mass or more, and still more preferably 90% by mass or more with respect to all repeating units of the specific compound. The upper limit is not particularly limited and may be 100% by mass.

### <Other repeating units>

The specific compound which is a polymer may have a repeating unit other than the above-described repeating units.

Examples of the other repeating units include a repeating unit containing a reactive group.

Examples of the reactive group include a radically polymerizable group and a cationically polymerizable group, and a radically polymerizable group is preferable. Examples of the reactive group also include a functional group capable of forming a covalent bond complex with a hydroxyl group.

As the radically polymerizable group, a known radically polymerizable group can be used, and examples thereof include a vinyl group, an allyl group, a vinyloxy group, a maleimide group, an allyloxy group, a (meth)acryloyl group, a (meth)acryloyloxy group, and a (meth)acrylamide group. Among these, a (meth)acryloyl group or a (meth)acryloyloxy group is preferable.

As the cationically polymerizable group, a known cationically polymerizable group can be used, and examples thereof include an alicyclic ether group, a cyclic acetal group, a cyclic lactone group, a cyclic thioether group, a spiroorthoester group, and a vinyloxy group. Among these, an alicyclic ether group or a vinyloxy group is preferable, and an epoxy group, an oxetanyl group, or a vinyloxy group is more preferable.

As the functional group capable of forming a covalent bond complex with a hydroxyl group, a boronic acid group (-B(OH)₂) and a boronic acid ester group (-B(OR^{B1})₂) are preferable.

R^{B1}'s each independently represent a hydrogen atom, an alkyl group which may have a substituent, an aryl group which may have a substituent, or a heteroaryl which may have a substituent, and a hydrogen atom or an alkyl group which may have a substituent is preferable.

R^{B1}'s may be bonded to each other to form a ring. The number of ring members of the ring formed by bonding R^{B1}'s to each other is preferably 4 to 8 and more preferably 5 or 6.

From the viewpoint that the compatibility with the liquid crystal compound is more excellent, the repeating unit having a reactive group is preferably a repeating unit represented by Formula (d1).

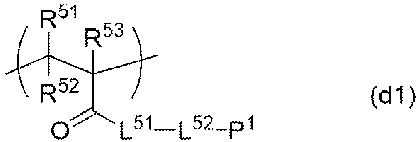

In Formula (d1), R⁵¹ and R⁵² each independently represent a hydrogen atom or an alkyl group.

Examples of the above-described alkyl group include a linear alkyl group having 1 to 18 carbon atoms and a branched or cyclic alkyl group having 3 to 18 carbon atoms.

It is preferable that R⁵¹ and R⁵² represent a hydrogen atom.

In Formula (d1), the definition and suitable aspect of R⁵³ are the same as those of R³¹ in Formula (2), and the definition and suitable aspect of L⁵¹ are the same as those of L³¹ in Formula (2).

In Formula (d1), L⁵¹ represents a single bond or a divalent linking group.

Examples of the above-described divalent linking group include a divalent aliphatic hydrocarbon group having 1 to 20 carbon atoms, which may have a substituent.

The aliphatic hydrocarbon group having 1 to 20 carbon atoms is preferably an alkylene group having 1 to 15 carbon atoms and more preferably an alkylene group having 2 to 8 carbon atoms.

One or more of -CH₂-'s constituting the above-described divalent aliphatic hydrocarbon group may be each independently substituted with a group selected from -O-, -S-, -CO-, and -N(Q)-. Two or more of a plurality of -CH₂-'s may be substituted as long as the same group is not adjacent. The definition and suitable aspect of Q are as described above.

Examples of the substituent that the above-described divalent linking group may have include a hydroxy group, a halogen atom, an amino group, an alkyl group, an alkoxy group, an acyl group, an aryl group, a nitro group, a cyano group, an alkylcarbonyl group, and a sulfonyl group.

In Formula (d1), P¹ represents a reactive group. The definition and suitable aspect of the reactive group are as described above.

Specific examples of the repeating unit having a reactive group include the following repeating units.

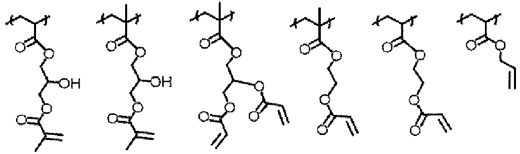

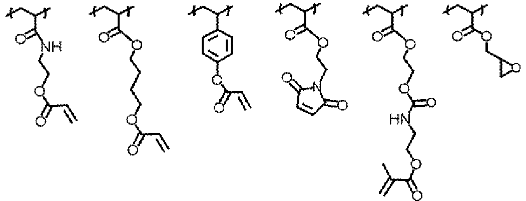

Examples of the repeating unit containing a boronic acid group or a boronic acid ester group as the reactive group also include the repeating units described in paragraphs 0036 to 0045 of WO2018/062068A.

Examples of the repeating unit other than those described above include a repeating unit derived from (meth)acrylic acid alkyl (the number of carbon atoms in the alkyl group moiety is 1 to 24), a styrene derivative, (meth)acrylonitrile, a vinyl ether derivative, and an alkyl (meth)acrylamide derivative.

In a case where the specific compound is a copolymer containing two or more kinds of repeating units, the copolymer may be any of a random copolymer, an alternating copolymer, or a block copolymer. In addition, a random, alternating, and block aspect may be mixed.

From the viewpoint that the effect of the present invention is more excellent, a weight-average molecular weight of the specific compound is preferably 3,000 to 200,000, more preferably 5,000 to 100,000, and still more preferably 8,000 to 100,000.

The weight-average molecular weight in the present invention is a value measured by a gel permeation chromatography (GPC) method under the following conditions.
· Solvent (eluant): tetrahydrofuran
· Apparatus name: EcoSEC HLC-8320GPC (manufactured by Tosoh Corporation)
· Column: three columns of TSKgel SuperHZM-H, TSKgel SuperHZ4000, and TSKgel SuperHZ200 (all manufactured by Tosoh Corporation) are connected and used
· Column temperature: 40°C
· Sample concentration: 0.1% by mass
· Flow rate: 0.35 ml/min
· Calibration curve: TSK standard polystyrene (manufactured by TOSOH Corporation), calibration curves of six samples with Mw of 706,000 to 1,013 (Mw/Mn = 1.03 to 1.06) are used.

The specific compound may be used alone or in combination of two or more thereof.

From the viewpoint that the effect of the present invention is more excellent, a content of the specific compound is preferably 5% by mass or less, more preferably 1% by mass or less, and still more preferably 0.1% by mass or less with respect to the total solid content of the composition. In addition, from the viewpoint that the effect of the present invention is more excellent, the content of the specific compound is preferably 0.001% by mass or more and more preferably 0.01% by mass or more with respect to the total solid content of the composition.

### [Liquid crystal compound]

The liquid crystal compound contained in the composition according to the embodiment of the present invention is not particularly limited.
In general, the liquid crystal compound can be classified into a rod-like type and a disk-like type depending on the shape thereof. Furthermore, each type includes a low-molecular-weight type and a high-molecular-weight type. The "high-molecular-weight" generally refers to a compound having a degree of polymerization of 100 or more (Polymer Physics-Phase Transition Dynamics, written by Masao Doi, p.2, published by Iwanami Shoten, 1992). In the present invention, any liquid crystal compound can be used, but a rod-like liquid crystal compound or a disk-like liquid crystal compound (discotic liquid crystal compound) is preferably used. A mixture of two or more kinds of the rod-like liquid crystal compounds, a mixture of two or more kinds of the disk-like liquid crystal compounds, or a mixture of the rod-like liquid crystal compound and the disk-like liquid crystal compound may be used.

The liquid crystal compound contained in the composition may be either a low molecular weight liquid crystal compound or a polymer liquid crystal compound, or may be a mixture thereof.
The liquid crystal compound is preferably a polymerizable liquid crystal compound, from the viewpoint of aligning properties.
The polymerizable liquid crystal compound is a liquid crystal compound having a polymerizable group, and the alignment state thereof can be immobilized by polymerizing the compound after alignment. In addition, the alignment state of the polymer liquid crystal compound can be immobilized by removing the solvent from the composition after the alignment of the compound and drying the composition.

The polymerizable liquid crystal compound is preferably at least one polymerizable liquid crystal compound selected from the group consisting of a polymerizable rod-like liquid crystal compound and a polymerizable disk-like liquid crystal compound.
The polymerizable group contained in the polymerizable liquid crystal compound is not particularly limited, and is preferably a polymerizable group capable of radical polymerization or cationic polymerization. Examples of the polymerizable group include an acryloyl group, a methacryloyl group, an epoxy group, and a vinyl group.

The rod-like liquid crystal compound is preferably one described in claim 1 of JP1999-513019A (JP-H11-513019A) or paragraphs [0026] to [0098] of JP2005-289980A, and the discotic liquid crystal compound is preferably one described in paragraphs [0020] to [0067] of JP2007-108732A or paragraphs [0013] to [0108] of JP2010-244038A.

A liquid crystal compound having reverse wavelength dispersibility (reverse dispersibility compound) may be used as the liquid crystal compound. In the present specification, the liquid crystal compound having "reverse wavelength dispersibility" refers to a liquid crystal compound in which, in a case where an in-plane retardation (Re) value of a film produced using such a liquid crystal compound is measured at a specific wavelength (visible light range), the Re value is equal to or higher than an increase in measurement wavelength.

The liquid crystal compound having reverse wavelength dispersibility is not particularly limited as long as it can form a layer having reverse wavelength dispersibility, and examples thereof include the compounds represented by General Formula (I) described in JP2008-297210A (particularly, the compounds described in paragraphs [0034] to [0039]), the compounds represented by General Formula (1) described in JP2010-084032A (particularly, the compounds described in paragraphs [0067] to [0073]), the compounds represented by General Formula (1) described in JP2016-081035A (particularly, the compounds described in paragraphs [0043] to [0055]), and the compounds represented by General Formula (II) described in JP2016-053709A (particularly, the compounds described in paragraphs [0036] to [0043]).

Further examples of the liquid crystal compound having reverse wavelength dispersibility include the compounds described in paragraphs [0027] to [0100] of JP2011-006360A, paragraphs [0028] to [0125] of JP2011-006361A, paragraphs [0034] to [0298] of JP2012-207765A, paragraphs [0016] to [0345] of JP2012-077055A, paragraphs [0017] to [0072] of WO12/141245A, paragraphs [0021] to [0088] of WO12/147904A, paragraphs [0028] to [0115] of WO14/147904A, and paragraphs [0025] to [0056] of WO2021/060427A.

The liquid crystal compounds may be used alone or in combination of two or more thereof.

The content of the liquid crystal compound is preferably 50% to 99.99% by mass, and more preferably 70% to 99% by mass with respect to the total solid content of the composition.

### [Other components]

The composition may contain components other than the above-described components. Examples of the other components include a polymerization initiator, a chiral agent, an alignment control agent, a solvent, a crosslinking agent, and a precipitation inhibitor.

### <Polymerization initiator>

The composition preferably contains a polymerization initiator.

The polymerization initiator is not particularly limited, but a photopolymerization initiator is preferable.

As the photopolymerization initiator, a known photopolymerization initiator can be used. Examples thereof include an α-carbonyl compound, an acyloin ether, an α-hydrocarbon-substituted aromatic acyloin compound, a polynuclear quinone compound, a combination of a triarylimidazole dimer and p-aminophenyl ketone, an acridine compound, a phenazine compound, an oxadiazole compound, an o-acyloxime compound, and an acylphosphine oxide compound.

Commercially available products can also be used as the photopolymerization initiator, and examples thereof include IRGACURE 184, IRGACURE 907, IRGACURE 369, IRGACURE 651, IRGACURE 819, IRGACURE OXE-01, and IRGACURE OXE-02 (all manufactured by BASF SE).

The content of the polymerization initiator is preferably 0.01% to 30% by mass, and more preferably 0.1% to 15% by mass with respect to the total solid content of the composition.

### <Alignment control agent>

The composition may contain an alignment control agent as necessary. The alignment control agent makes it possible to form various alignment states such as homeotropic alignment (vertical alignment), tilt alignment, hybrid alignment, and cholesteric alignment in addition to homogeneous alignment, and also makes it possible to achieve a specific alignment state more uniformly and with more precise control.

For example, a low molecular weight alignment control agent or a high molecular weight alignment control agent can be used as the alignment control agent which accelerates homogeneous alignment.
With regard to the low molecular weight alignment control agent, reference can be made to the descriptions in, for example, paragraphs [0009] to [0083] of JP2002-020363A, paragraphs [0111] to [0120] of JP2006-106662A, and paragraphs [0021] to [0029] of JP2012-211306A, the contents of which are incorporated herein by reference.
With regard to the high molecular weight alignment control agent, reference can be made to the descriptions in, for example, paragraphs [0021] to [0057] of JP2004-198511A and paragraphs [0121] to [0167] of JP2006-106662A, the contents of which are incorporated herein by reference.

Examples of the alignment control agent that forms or accelerates homeotropic alignment include a boronic acid compound and an onium salt compound, and specifically, reference can be made to the compounds described in, for example, paragraphs [0023] to [0032] of JP2008-225281A, paragraphs [0052] to [0058] of JP2012-208397A, paragraphs [0024] to [0055] of JP2008-026730A, and paragraphs [0043] to [0055] of JP2016-193869A, the contents of which are incorporated herein by reference.

The cholesteric alignment can be achieved by adding a chiral agent to the composition, and it is possible to control the direction of revolution of the cholesteric alignment by its chiral direction. Incidentally, it is possible to control a pitch of the cholesteric alignment in accordance with an alignment regulating force of the chiral agent.

The chiral agent may be selected according to the purpose because a helical twisted direction or a helical pitch of the induced helix varies depending on the compound.

The chiral agent is not particularly limited, and examples thereof include known compounds (for example, Liquid Crystal Device Handbook, Chapter 3, Article 4-3, chiral agents for twisted nematic (TN) and super twisted nematic (STN), p.199, edited by the 142nd Committee of Japan Society for the Promotion of Science, 1989, and the like), isosorbide, and isomannide derivatives.

The chiral agent generally includes an asymmetric carbon atom, but an axially chiral compound or a planar chiral compound including no asymmetric carbon atom can also be used as the chiral agent. As the axially chiral compound or the planar chiral compound, for example, binaphthyl, helicene, paracyclophane, and derivatives thereof are mentioned.

The chiral agent may also have a polymerizable group.

The polymerizable group of the chiral agent is preferably an unsaturated polymerizable group, an epoxy group, or an aziridinyl group, more preferably an unsaturated polymerizable group, and still more preferably an ethylenically unsaturated polymerizable group.

The chiral agent may have a photoisomerization moiety.

The photoisomerization moiety is preferably a cinnamoyl moiety, a chalcone moiety, an azobenzene moiety, or a stilbene moiety, and more preferably a cinnamoyl moiety, a chalcone moiety, or a stilbene moiety.

Examples of the chiral agent include optically active isosorbide derivatives described in paragraphs [0015] to [0049] of JP2003-313187A, optically active isomannide derivatives described in paragraphs [0015] to [0057] of JP2003-313188A, optically active polyester/amide described in paragraphs [0015] to [0052] of JP2003-313292A, and chiral agents described in paragraphs [0012] to [0053] of WO2018/194157A.

In a case where the composition contains a chiral agent, from the viewpoint that the liquid crystal compound is likely to be uniformly aligned, the content of the chiral agent is preferably 5.0% by mass or less, more preferably 3.0% by mass or less, still more preferably 2.0% by mass or less, and particularly preferably less than 1.0% by mass with respect to the total mass of the liquid crystal compound. The lower limit is not particularly limited, and is preferably 0.01% by mass or more, more preferably 0.02% by mass or more, and still more preferably 0.05% by mass or more.

The chiral agent may be used alone or in combination of two or more kinds thereof. In a case where two or more kinds of the chiral agents are used in combination, a total content thereof is preferably within the range.

In a case where a film having a plurality of alignment states in one layer is formed, it is preferable that two or more types of chiral agents including a chiral agent A and a chiral agent B that induces a helix in a direction opposite to that of the chiral agent A are used as the chiral agent. For example, in a case where the helix induced by the chiral agent A is right-handed, the helix induced by the chiral agent B is left-handed.

### <Solvent>

The composition preferably contains a solvent, from the viewpoint of workability for forming a coating film or the like.
Examples of the solvent include organic solvents such as ketones (for example, acetone, 2-butanone, methyl ethyl ketone, methyl isobutyl ketone, cyclopentanone, and cyclohexanone), ethers (for example, dioxane, tetrahydrofuran, tetrahydropyran, dioxolane, tetrahydrofurfuryl alcohol, and cyclopentyl methyl ether), aliphatic hydrocarbons (for example, hexane), alicyclic hydrocarbons (for example, cyclohexane), aromatic hydrocarbons (for example, benzene, toluene, xylene, and trimethylbenzene), halogenated carbons (for example, dichloromethane, trichloromethane (chloroform), dichloroethane, dichlorobenzene, and chlorotoluene), esters (for example, methyl acetate, ethyl acetate, ethyl propionate, butyl acetate, and diethyl carbonate), alcohols (for example, ethanol, isopropanol, butanol, and cyclohexanol), cellosolves (for example, methyl cellosolve, ethyl cellosolve, and 1,2-dimethoxyethane), cellosolve acetates, sulfoxides (for example, dimethyl sulfoxide), amides (for example, dimethylformamide, dimethylacetamide, N-methylpyrrolidone, N-ethylpyrrolidone, and 1,3-dimethyl-2-imidazolidinone), and heterocyclic compounds (for example, pyridine), and water.

These solvents may be used alone or in combination of two or more kinds thereof.

The composition may contain a component other than the above-described components, as necessary. Examples thereof include a chiral agent, a chain transfer agent, a tilt angle controlling agent, and a plasticizer.

### [Use application]

The composition according to the embodiment of the present invention is preferably used for forming a film.

The above-described film may be a liquid crystal film exhibiting liquid crystallinity, or may be a film (liquid crystal cured film) in which an alignment state of the liquid crystal compound in the composition is immobilized. In the liquid crystal cured film, the liquid crystal compound may not exhibit liquid crystallinity.

### [Film]

As described above, the film formed of the composition according to the embodiment of the present invention (hereinafter, also referred to as "specific film") may be any of a liquid crystal film or a liquid crystal cured film, and is preferably a liquid crystal cured film.

Examples of a method of forming the liquid crystal cured film include a method of setting a liquid crystal compound contained in a coating film formed of the above-described composition according to the embodiment of the present invention to a desired alignment state and then immobilizing the alignment state by polymerization.
In addition, conditions for the above-described polymerization are not particularly limited, but ultraviolet rays are preferably used in the polymerization by light irradiation. An irradiation amount is preferably 10 mJ/cm² to 50 J/cm², more preferably 20 mJ/cm² to 5 J/cm², still more preferably 30 mJ/cm² to 3 J/cm², and particularly preferably 50 to 1,000 mJ/cm². In order to promote the polymerization reaction, the treatment may be performed under heating conditions.

The alignment state of the liquid crystal compound in the specific film may be any of a state of horizontal alignment, a state of vertical alignment, a state of tilt alignment, or a state of twisted alignment.

In addition, a plurality of alignment states may be provided in a film as in the liquid crystal cured layer described in WO2021/033640A, having, along a thickness direction, a first region in which an alignment state of a liquid crystal compound twist-aligned along a helical axis extending along a thickness direction is immobilized and a second region in which an alignment state of a liquid crystal compound homogeneously aligned is immobilized.

In the present specification, the "horizontal alignment" means that a major axis direction of the liquid crystal compound is parallel to a main surface of the specific film (or a surface of a member on which the specific film is formed, such as a support or an alignment film). It is not required for the main surface of the optically anisotropic film and the major axis direction of the liquid crystal compound to be strictly parallel to each other, and in the present specification, the horizontal alignment means that alignment is made such that the angle formed between the major axis direction of the liquid crystal compound and the main surface of the specific film is less than 10°.

The above-described liquid crystal cured film is preferably an optically anisotropic layer.
Examples of the optically anisotropic layer include a positive A-plate, a positive C-plate, and an optically anisotropic layer (hereinafter, this aspect is referred to as an "optically anisotropic layer A") including a first region in which an alignment state of a liquid crystal compound twist-aligned along a helical axis extending along a thickness direction is immobilized and a second region in which an alignment state of a homogeneously aligned liquid crystal compound is immobilized, along the thickness direction.

Here, the positive A-plate (A-plate which is positive) and the positive C-plate (C-plate which is positive) are defined as follows.

The positive A-plate satisfies a relationship of Expression (A1) and the positive C-plate satisfies a relationship of Expression (C1), assuming that a refractive index in a film in-plane slow axis direction (in a direction in which an in-plane refractive index is maximum) is defined as nx, a refractive index in an in-plane direction orthogonal to the in-plane slow axis is defined as ny, and a refractive index in a thickness direction is defined as nz. The positive A-plate has an Rth showing a positive value and the positive C-plate has an Rth showing a negative value. $nx > ny \approx nz$ Expression (A1) $nz > nx \approx ny$ Expression (C1)

The symbol "≈" encompasses not only a case where both sides are completely the same as each other but also a case where both sides are substantially the same as each other.

With regard to the positive A-plate, the expression "substantially the same" means that, for example, a case where (ny - nz) × d (in which d is a thickness of a film) is -10 to 10 nm and preferably -5 to 5 nm is also included in "ny ≈ nz"; and a case where (nx - nz) x d is -10 to 10 nm and preferably -5 to 5 nm is also included in "nx ≈ nz". In addition, in the positive C-plate, for example, a case where (nx - ny) × d (in which d is a thickness of a film) is 0 to 10 nm, and preferably 0 to 5 nm is also included in "nx ≈ ny".

In a case where the liquid crystal cured film is the positive A-plate, from the viewpoint of functioning as a λ/4 plate, Re(550) is preferably 100 to 180 nm, more preferably 120 to 160 nm, still more preferably 130 to 150 nm, and particularly preferably 130 to 145 nm.

Here, the "λ/4 plate" is a plate having a λ/4 function, specifically, a plate having a function of converting linearly polarized light having a specific wavelength into circularly polarized light (or converting circularly polarized light into linearly polarized light).

An optically anisotropic layer (optically anisotropic layer A) having a first region in which an alignment state of a liquid crystal compound twist-aligned along a helical axis extending along a thickness direction is immobilized and a second region in which an alignment state of a homogeneously aligned liquid crystal compound is immobilized, along the thickness direction, will be described in detail.

In a case where the thickness of the first region of the optically anisotropic layer is defined as d1 (nm) and the refractive index anisotropy of the first region measured at a wavelength of 550 nm is defined as Δn1, from the viewpoint that an optically anisotropic layer can be suitably applied to a circular polarization plate, the first region preferably satisfies Expression (1-1). $100 nm \leq Δn 1 d 1 \leq 240 nm$ Expression (1-1)

Above all, the first region more preferably satisfies Expression (1-2) and still more preferably satisfies Expression (1-3). $120 nm \leq Δn 1 d 1 \leq 220 nm$ Expression (1-2) $140 nm \leq Δn 1 d 1 \leq 200 nm$ Expression (1-3) It is noted that the refractive index anisotropy Δn1 means a refractive index anisotropy of the first region.

The absolute value of the twisted angle of the liquid crystal compound in the first region is not particularly limited and is preferably 60° to 120° and more preferably 70° to 110° from the viewpoint that an optically anisotropic layer can be suitably applied to a circular polarization plate. The twisted angle is measured using Axoscan of Axometrics, Inc. and using device analysis software of Axometrics, Inc.

In addition, in a case where the thickness of the second region of the optically anisotropic layer A is defined as d2 (nm) and the refractive index anisotropy of the second region measured at a wavelength of 550 nm is defined as Δn2, from the viewpoint that an optically anisotropic layer can be suitably applied to a circular polarization plate, the second region preferably satisfies Expression (2-1). $100 nm \leq Δn 2 d 2 \leq 240 nm$ Expression (2-1)

Above all, the second region more preferably satisfies Expression (2-2) and still more preferably satisfies Expression (2-3). $120 nm \leq Δn 2 d 2 \leq 220 nm$ Expression (2-2) $140 nm \leq Δn 2 d 2 \leq 200 nm$ Expression (2-3)

The refractive index anisotropy Δn2 means a refractive index anisotropy of the second region.

A thickness of the specific film is not particularly limited, but is preferably 0.1 to 10 µm and more preferably 0.5 to 5 µm.

### [Optical film]

It is also preferable that the composition according to the embodiment of the present invention is used for an optical film. In other words, the specific film can be used as an optical film in combination with other layers.

Examples of the optical film include an optical film including a support, an alignment film, and a liquid crystal cured layer in this order. The support and the alignment film are both optional members.

### [Liquid crystal cured layer]

The liquid crystal cured layer may be the above-described liquid crystal cured film, or may include a liquid crystal cured film and another liquid crystal layer. That is, the liquid crystal cured film may be formed on a surface of another liquid crystal layer, or another liquid crystal layer may be formed on a surface of the liquid crystal cured film. For example, in a case where a polarizing plate described later is used as a circular polarization plate, or in a case where an optical film is used as an optical compensation film of an in-plane switching (IPS) type or fringe-field-switching (FFS) type liquid crystal display device, the liquid crystal cured layer is preferably a laminate of a positive A-plate and a positive C-plate.

The other liquid crystal layer may be a liquid crystal layer obtained by immobilizing the above-described liquid crystal composition in a predetermined alignment state, or may be a liquid crystal layer obtained by immobilizing a composition including a liquid crystal compound and optionally an optional component (for example, a polymerization initiator, a dichroic substance, and a leveling agent) in a predetermined alignment state.

In a case where the liquid crystal cured film is laminated with another liquid crystal layer, it is also preferable that the liquid crystal cured film is laminated with the other liquid crystal layer through an adhesion layer. Examples of the adhesion layer include known adhesive layers and pressure-sensitive adhesive layers.

Examples of the material for forming the pressure-sensitive adhesive layer include a member formed of a substance in which a ratio (tanδ = G"/G') between a storage elastic modulus G' and a loss elastic modulus G", each measured with a dynamic viscoelastometer, is 0.001 to 1.5, in which a so-called pressure-sensitive adhesive, a readily creepable substance, and the like are included. Examples of the pressure-sensitive adhesive include a polyvinyl alcohol-based pressure-sensitive adhesive.

The adhesive layer is preferably a curable adhesive composition which is cured by irradiation with active energy rays or by heating. Examples of the curable adhesive composition include a curable adhesive composition containing a cationically polymerizable compound and a curable adhesive composition containing a radically polymerizable compound.

The thickness of the adhesive layer is preferably 0.01 to 20 µm, more preferably 0.01 to 10 µm, and even more preferably 0.05 to 5 µm. In a case where the thickness of the adhesive layer is within this range, lifting or peeling is less likely to occur between the protective layer or the liquid crystal cured layer and the polarizer, which are laminated. In addition, from the viewpoint of being able to suppress the generation of air bubbles, the thickness of the adhesive layer is preferably 0.4 µm or more.

With regard to the adhesive layer, reference can be made to, for example, the description in paragraphs [0062] to [0080] of JP2016-035579A, the contents of which are incorporated herein by reference.

The liquid crystal cured layer may be peeled off from the support and used alone as the optical film.

### [Support]

The support is a substrate for forming a film.

The support is preferably transparent. Specifically, a light transmittance thereof is preferably 80% or more.

Examples of the support include a glass substrate and a polymer film. Examples of the material for the polymer film include cellulose-based polymers; acrylic polymers having an acrylic acid ester polymer such as polymethyl methacrylate and a lactone ring-containing polymer; thermoplastic norbornene-based polymers; polycarbonate-based polymers; polyester-based polymers such as polyethylene terephthalate and polyethylene naphthalate; styrene-based polymers such as polystyrene and an acrylonitrile-styrene copolymer (AS resin); polyolefin-based polymers such as polyethylene, polypropylene, and an ethylene-propylene copolymer; vinyl chloride-based polymers; amide-based polymers such as nylon and aromatic polyamide; imide-based polymers; sulfone-based polymers; polyether sulfone-based polymers; polyether ether ketone-based polymers; polyphenylene sulfide-based polymers; vinylidene chloride-based polymers; vinyl alcohol-based polymers; vinyl butyral-based polymers; arylate-based polymers; polyoxymethylene-based polymers; epoxy-based polymers; and polymers made by mixing these polymers.

In addition, an aspect in which a polarizer described later may also function as the support is also adopted.

The thickness of the support is not particularly limited and is preferably 5 to 100 µm, and more preferably 5 to 50 µm. It is preferable that the support is peelable.

### [Alignment film]

In the optical film, it is preferable that an alignment film is provided between the support and the film. An aspect in which the above-mentioned support also serves as the alignment film may be adopted.

The alignment film generally contains a polymer as a main component. The polymer material for the alignment film is described in many publications, and many commercially available products are available.

The polymer material used in the present invention is preferably a polyvinyl alcohol, a polyimide, or a derivative thereof. In particular, a modified or non-modified polyvinyl alcohol is preferable.

Examples of the alignment film that can be used in the present invention include the alignment films described in line 24 on page 43 to line 8 on page 49 of WO01/088574A; the modified polyvinyl alcohols described in paragraphs [0071] to [0095] of JP3907735B; and the liquid crystal alignment films formed by a liquid crystal aligning agent, described in JP2012-155308A.

In the present invention, for the reason that it is possible to prevent deterioration in the surface condition by not coming into contact with the surface of the alignment film during the formation of the alignment film, it is also preferable to use a photo-alignment film as the alignment film.

The photo-alignment film is not particularly limited, and polymer materials such as a polyamide compound and a polyimide compound, described in paragraphs [0024] to [0043] of WO2005/096041A; liquid crystal alignment films formed by a liquid crystal aligning agent having a photo-aligned group with a cinnamic acid structure, described in JP2012-155308A; a trade name LPP-JP265CP manufactured by Rolic Technologies Ltd.; or the like can be used.

The thickness of the alignment film is not particularly limited, and from the viewpoint of forming an optically anisotropic layer having a uniform film thickness by alleviating the surface unevenness that may be present on the support, the thickness of the alignment film is preferably 0.01 to 10 µm, more preferably 0.01 to 1 µm, and still more preferably 0.01 to 0.5 µm.

The optical film also preferably contains an ultraviolet (UV) absorber, taking an effect of external light (particularly ultraviolet rays) into consideration.

The ultraviolet absorber may be contained in the liquid crystal cured film or may be contained in a member other than the liquid crystal cured film. Suitable examples of the member other than the liquid crystal cured film include a support.

As the ultraviolet absorber, any one of ultraviolet absorbers known in the related art, which can express ultraviolet absorptivity, can be used. Among such ultraviolet absorbers, it is preferable to use a benzotriazole-based ultraviolet absorber or a hydroxyphenyltriazine-based ultraviolet absorber, from the viewpoint of achieving a high ultraviolet absorptivity and obtaining an ultraviolet absorbing ability (ultraviolet-shielding ability) for use in an image display device.

In addition, in order to broaden the absorption width of ultraviolet rays, two or more types of ultraviolet absorbers having different maximum absorption wavelengths can be used in combination.

Specific examples of the ultraviolet absorber include the compounds described in paragraphs [0258] and [0259] of JP2012-018395A and the compounds described in paragraphs [0055] to [0105] of JP2007-072163A.

In addition, for example, Tinuvin 400, Tinuvin 405, Tinuvin 460, Tinuvin 477, Tinuvin 479, and Tinuvin 1577 (all manufactured by BASF SE) can be used as a commercially available product of the ultraviolet absorber.

### [Polarizing plate]

It is also preferable that the composition according to the embodiment of the present invention is used for a polarizing plate.

Examples of the polarizing plate include a polarizing plate having the above-mentioned optical film and a polarizer.

In a case where the liquid crystal cured layer (optically anisotropic layer) of the optical film is a positive A-plate, from the viewpoint that the optical film can be suitably applied to a circular polarization plate or the like, an angle formed by the slow axis of the positive A-plate and the absorption axis of a polarizer which will be described later is preferably 30° to 60°, more preferably 40° to 50°, still more preferably 42° to 48°, and particularly preferably 45°.

Here, the "slow axis" means a direction in which the in-plane refractive index of the liquid crystal cured layer is maximized, and the "absorption axis" of the polarizer means a direction in which the absorbance is the highest.

In a case where the liquid crystal cured layer (optically anisotropic layer) of the optical film is the above-mentioned optically anisotropic layer A, from the viewpoint that the optically anisotropic layer A can be suitably applied to a circular polarization plate or the like, the absolute value of the angle formed by the in-plane slow axis of the second region in which an alignment state of a homogeneously aligned liquid crystal compound is immobilized and the absorption axis of the polarizer is preferably 5° to 25° and more preferably 10° to 20°.

In addition, the polarizing plate can also be used as an optical compensation film of an IPS or FFS type liquid crystal display device.
In a case where the polarizing plate is used as an optical compensation film for an IPS mode or FFS mode liquid crystal display device, it is preferable that the above-mentioned optically anisotropic layer is used as at least one plate of a laminate of a positive A-plate and a positive C-plate, an angle formed by the slow axis of the positive A-plate layer and the absorption axis of a polarizer which will be described later are orthogonal or parallel, and specifically, it is more preferable that an angle formed by the slow axis of the positive A-plate layer and the absorption axis of the polarizer which will be described later is 0° to 5° or 85° to 95°.

In a case where the polarizing plate according to the embodiment of the present invention is used in an image display device described later, it is preferable that the angle between the slow axis of the liquid crystal cured layer and the absorption axis of the polarizer described later is parallel or orthogonal.

It is noted that in the present specification, a term "parallel" does not require to be strictly parallel (an angle formed is 0°), but means that an angle formed between one and the other is less than 10°. In addition, the term "orthogonal" does not require to be strictly orthogonal (an angle formed is 90°), but means that an angle formed between one and the other is more than 80° and less than 100°.

### [Polarizer]

The polarizer is not particularly limited as long as it is a member having a function of converting light into specific linearly polarized light, and an absorption type polarizer, a reflective polarizer, and a coating type polarizer, which are known in the related art, can be used.

Examples of the absorption type polarizer include an iodine-based polarizer, a dye-based polarizer using a dichroic dye, and a polyene-based polarizer. The iodine-based polarizer and the dye-based polarizer include a coating type polarizer and a stretching type polarizer, any of which can be applied. A polarizer produced by adsorbing iodine or a dichroic dye onto a polyvinyl alcohol and stretching the resulting material is preferable.

Examples of the coating type polarizer include a polarizer containing a cured product of a liquid crystal compound and a dichroic coloring agent.

Examples of the reflective polarizer include a polarizer in which thin films having different birefringence are laminated, a wire grid type polarizer, and a polarizer in which a cholesteric liquid crystal having a selective reflection range is combined with a 1/4 wavelength plate.

A thickness of the polarizer is not particularly limited, but is preferably 3 to 60 µm, more preferably 3 to 30 µm, and still more preferably 3 to 10 µm.

In the polarizing plate, an adhesion layer may be disposed between the liquid crystal cured layer in the optical film and the polarizer. The adhesion layer may be, for example, an adhesion layer that may be included in the optical film.

### [Image display device]

The composition according to the embodiment of the present invention is also preferably used in an image display device.

The image display device may be, for example, an image display device having the above-mentioned optical film or polarizing plate.

The display element used in the image display device is not particularly limited, and examples thereof include a liquid crystal cell, an organic electroluminescence (hereinafter, referred to as "organic EL") display panel, and a plasma display panel, among which a liquid crystal cell or an organic EL display panel is preferable.

### [Liquid crystal display device]

A liquid crystal display device as an example of the image display device is a liquid crystal display device including the above-described polarizing plate and a liquid crystal cell.

Of the polarizing plates provided on both sides of the liquid crystal cell, it is preferable to use the above-mentioned polarizing plate as a polarizing plate on the front side, and it is more preferable to use the above-mentioned polarizing plate as polarizing plates on the front and rear sides.

### <Liquid crystal cell>

The liquid crystal cell used in the liquid crystal display device is preferably in a vertical alignment (VA) mode, an optically compensated bend (OCB) mode, an in-plane-switching (IPS) mode, a fringe-field-switching (FFS) mode, or a twisted nematic (TN) mode, but is not limited thereto.

### [Organic EL display device]

Examples of the organic EL display device which is an example of the image display device include an aspect in which a polarizer, a λ/4 plate consisting of the above-mentioned liquid crystal cured layer, and an organic EL display panel are provided in this order from the viewing side.

In addition, the organic EL display panel is a display panel configured using an organic EL element which has an organic light emitting layer (organic electroluminescence layer) sandwiched between electrodes (between a cathode and an anode). The configuration of the organic EL display panel is not particularly limited, and a known configuration may be adopted.

### [Polymer]

The present invention also includes an invention of a specific polymer which is a specific compound that is a polymer.

The specific polymer preferably includes a repeating unit represented by Formula (1) and a repeating unit represented by Formula (2), and has a weight-average molecular weight of 5,000 to 100,000.

The details of the specific compound that is a polymer, the repeating unit represented by Formula (1), and the repeating unit represented by Formula (2) are as described above.

### [Compound]

The present invention includes an invention of a compound capable of synthesizing the specific polymer.

Examples of the compound capable of synthesizing the specific polymer include a compound having at least one group (hereinafter, also referred to as a "specific group") selected from the group consisting of a group represented by Formula (Rfc2), a group represented by Formula (Rfc3), and a group represented by Formula (Rfn2).

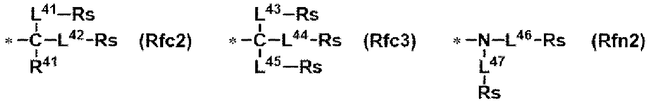

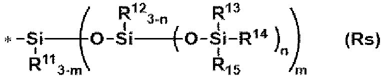

Formula (Rfc2), Formula (Rfc3), and Formula (Rfn2) are as described above.

The compound capable of synthesizing the specific polymer is preferably a monomer containing the above-described specific group. The monomer containing the above-described specific group is a compound having the above-described specific group and a polymerizable group.

Examples of the polymerizable group include a radically polymerizable group and a cationically polymerizable group, and a radically polymerizable group is preferable. Examples of the radically polymerizable group include a vinyl group, an allyl group, a vinyloxy group, a maleimide group, an allyloxy group, a (meth)acryloyl group, a (meth)acryloyloxy group, and a (meth)acrylamide group, and a (meth)acryloyl group, a (meth)acryloyloxy group, or a (meth)acrylamide group is preferable.

Among these, the compound capable of synthesizing the specific polymer is preferably a compound represented by Formula (MA1) or a compound represented by Formula (MB1).

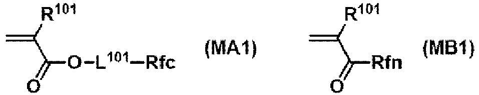

In Formula (MA1) and Formula (MB1), R¹⁰¹'s each independently represent a hydrogen atom or a methyl group.
In Formula (MA1), L¹⁰¹ represents a single bond or an alkylene group.

The alkylene group is preferably a linear alkylene group having 1 to 3 carbon atoms, and more preferably a methylene group.

Rfc represents the group represented by Formula (Rfc2) or the group represented by Formula (Rfc3).

In Formula (MB1), Rfn represents the group represented by Formula (Rfn2).

The specific compound, the specific polymer, and the above-described compound according to the embodiment of the present invention are expected to be utilized as a leveling agent or a surfactant. In addition, the specific compound, the specific polymer, and the above-described compound according to the embodiment of the present invention are expected to be applied to various uses such as a resin composition, a resist composition, a coating composition, a paint composition, a photosensitive composition, a dental composition, and an oral composition.

### Examples

Hereinbelow, the present invention will be described in more detail with reference to Examples.

The material, the amount used, the proportion, the process contents, the process procedure, and the like shown in the following examples can be appropriately changed, within a range not departing from the gist of the present invention. Therefore, the scope of the present invention should not be construed as being limited to Examples shown below.

### [Synthesis of specific compound]

### [Synthesis of compound capable of synthesizing polymer]

Compounds M-6, M-1, M-14, and M-18, which are capable of synthesizing a specific compound which is a polymer, were synthesized according to the following procedure.

### <Synthesis of M-6, M-1, and M-14>

499.0 g of ethyl acetate, 24.30 g of deionized water, and palladium/carbon (palladium 5%, about 55% water-wet product) were added to a 1000 mL three-neck flask equipped with a stirrer, a cooling pipe, a nitrogen introduction pipe, and a thermometer, and the flask was purged with nitrogen. The three-neck flask was placed in an ice bath, and 100.0 g of 1,1,1,3,5,5,5-heptamethyltrisiloxane was added dropwise thereto over 30 minutes. After completion of the dropwise addition, the temperature was returned to room temperature, and the mixture was allowed to react for 3 hours. After the reaction, the palladium/carbon was removed by celite filtration, and then the mixture was concentrated under reduced pressure with a rotary evaporator to obtain 100.5 g of a colorless and transparent liquid. It was confirmed by ¹H-NMR that the above-described liquid was the following branched silanol (TMS2 silanol).

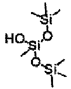

Subsequently, 99.0 g of the obtained TMS2 silanol and 285 g of toluene were added to a 500 mL three-neck flask equipped with a stirrer, a cooling pipe, a nitrogen introduction pipe, and a thermometer, and the three-neck flask was immersed in an ice bath. It was confirmed that the temperature was 5°C or lower, 32.5 g of pyridine was added dropwise thereto, and the mixture was continuously stirred until the temperature was 5°C or lower again. Separately, a solution was prepared by adding 18.4 g of toluene and 19.3 mL of dichloromethylsilane to a dropping funnel and mixing the components. The prepared solution was added dropwise to the three-neck flask over 30 minutes. After completion of the dropwise addition, the reaction solution was returned to room temperature, and the mixture was allowed to react for 3 hours. After the reaction, the precipitated solid was filtered off, and a liquid-liquid extraction was performed on the obtained colorless and transparent liquid. The liquid-liquid extraction was performed twice using 350 mL of deionized water, and the organic layer was recovered. Magnesium sulfate was added to the organic layer, and a dehydration operation was performed for 30 minutes or longer, and then the mixture was concentrated under reduced pressure with a rotary evaporator. Crushed silica gel (manufactured by FUJIFILM Wako Pure Chemical Corporation, WakoGel C-200) was added to the obtained liquid, the mixture was stirred, and then suction filtration was performed to obtain a colorless and transparent liquid. It was confirmed by ¹H-NMR that the above-described liquid was the following branched siloxane (TMS4 silane).

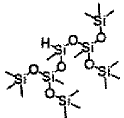

3.00 g of 1,3-bis(allyloxy)-2-propanol, 0.33 g of a platinum (0)-1,3-divinyltetramethyldisiloxane complex solution (containing approximately 20% platinum), and 21.6 g of tetrahydrofuran (containing a stabilizer) were placed in a 200 mL three-neck flask equipped with a stirrer, a cooling pipe, a nitrogen introduction pipe, and a thermometer, and the inside of the flask was replaced with nitrogen. 18.3 g of TMS4 silane obtained at 25°C was added dropwise thereto over 30 minutes. After completion of the dropwise addition, the mixture was allowed to react for 3 hours, crushed silica gel (manufactured by FUJIFILM Wako Pure Chemical Corporation, WakoGel C-200) and activated carbon were added thereto, and the mixture was stirred for 5 minutes and then subjected to celite filtration. The obtained transparent liquid was concentrated under reduced pressure with a rotary evaporator to obtain 21.0 g of a light yellow transparent liquid. It was confirmed by ¹H-NMR that the above-described liquid was an alcohol (TMS4*2-OH) containing the following branched siloxane which is an M-6 precursor.

TMS4-OH which is an M-1 precursor and TMS4*2-NH which is an M-14 precursor were obtained by the same procedure, except that 1,3-bis(allyloxy)-2-propanol was changed to a compound from which the following compound was obtained.

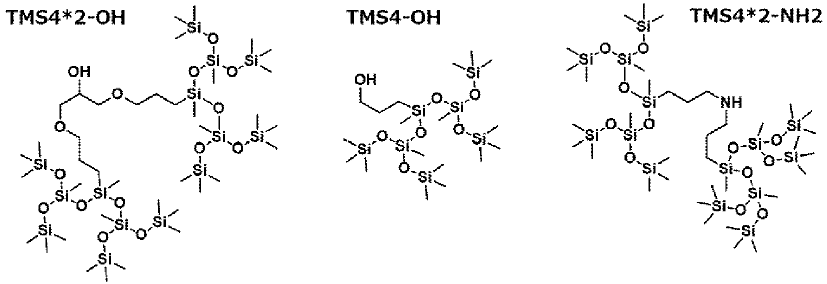

20.0 g of the obtained TMS4*2-OH, 1.69 g of triethylamine, and 24.9 g of tetrahydrofuran were added to a 200 mL three-neck flask equipped with a stirrer, a cooling pipe, a nitrogen introduction pipe, and a thermometer, and the three-neck flask was placed in an ice bath. After confirming that the temperature was 5°C or lower, 2.59 g of methacrylic acid chloride was added dropwise thereto. After completion of the dropwise addition, the reaction solution was returned to room temperature and allowed to react for 3 hours. After the reaction, the mixture was quenched with 20 g of deionized water. 100 mL of ethyl acetate/hexane = 1/1 was added to the reaction solution, and the organic layer was extracted. Thereafter, a liquid-liquid extraction was performed twice with 100 mL of deionized water and twice with 100 mL of saturated saline, and then the organic layer was collected and dehydrated with magnesium sulfate for 30 minutes or more. The obtained colorless transparent liquid was concentrated under reduced pressure using a rotary evaporator to obtain 18.0 g of a colorless transparent liquid. The obtained colorless transparent liquid was purified by silica gel chromatography to obtain M-6. The structure of M-6 was confirmed by ¹H-NMR and ¹³C-NMR.

M-1 and M-14 were obtained by the same method as in M-6, except that TMS4-OH or TMS4*2-NH was used instead of TMS4*2-OH.

### <Synthesis of M-18>

59 g of 4-chloro-1,1-dimethoxybutane, 50 g of 3-butene-1-ol, 0.76 g of 10-camphorsulfonic acid, and 91 mL of hexane were charged into a 1000 mL three-neck flask equipped with a stirrer, a cooling pipe, a distillation tube, a nitrogen introduction pipe, and a thermometer, and nitrogen was allowed to flow therethrough at 60 mL/min to initiate the reaction while hexane and methanol were allowed to flow out. After 30 minutes, 538 mL of hexane was added dropwise thereto over 3 hours. Next, 35 g of 3-butene-1-ol was added thereto, and the reaction was allowed to proceed for 30 minutes, and then 538 mL of hexane was added dropwise thereto over 3 hours. After completion of the dropwise addition, 1 mL of diisopropylethylamine was added thereto to stop the reaction. Hexane was added to the obtained hexane solution, and acetonitrile, deionized water, and triethylamine were added thereto to perform a liquid-liquid extraction. The obtained organic layer was dehydrated with magnesium sulfate, and the obtained transparent liquid was concentrated under reduced pressure with a rotary evaporator to obtain 73 g of a transparent liquid. It was confirmed by ¹H-NMR that the above-described liquid was a halogen compound having an allyl group (the following compound, Cl-allyl) which is a precursor of M-18.

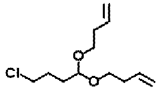

17.5 g of the above-described halogen compound having an allyl group (Cl-allyl), 0.72 g of a platinum (0)-1,3-divinyltetramethyldisiloxane complex solution (containing about 20% platinum), and 100 g of tetrahydrofuran (containing a stabilizer) were charged into a 300 mL three-neck flask equipped with a stirrer, a cooling pipe, a nitrogen introduction pipe, and a thermometer, and the inside of the flask was purged with nitrogen. 82.0 g of TMS4 silane obtained at 25°C was added dropwise thereto over 30 minutes. After completion of the dropwise addition, the mixture was allowed to react for 3 hours, crushed silica gel (manufactured by FUJIFILM Wako Pure Chemical Corporation, WakoGel C-200) and activated carbon were added thereto, and the mixture was stirred for 5 minutes and then subjected to celite filtration. The obtained transparent liquid was concentrated under reduced pressure with a rotary evaporator to obtain 93.0 g of a light yellow transparent liquid. It was confirmed by ¹H-NMR that the above-described liquid was a compound (TMS4*2-Cl) containing the following branched siloxane which is a precursor of M-18.

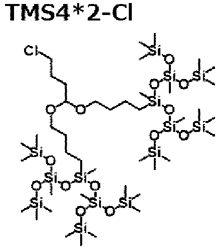

20.0 g of the obtained TMS4*2-Cl, 8.08 g of sodium methacrylate, 2.48 g of potassium iodide, 0.02 g of dibutylhydroxytoluene, and 91.7 g of dimethylacetamide were added to a 200 mL three-neck flask equipped with a stirrer, a cooling pipe, and a thermometer, and it was confirmed that the temperature was 85°C or lower, and the reaction was allowed to proceed for 7 hours.

After the reaction, the mixture was quenched with 8.00 g of deionized water. 400 mL of ethyl acetate/hexane = 1/1 was added to the reaction solution, and the organic layer was extracted. Thereafter, a liquid-liquid extraction was performed twice with 100 mL of deionized water and twice with 100 mL of saturated saline, and then the organic layer was collected and dehydrated with magnesium sulfate for 30 minutes or more. The obtained colorless transparent liquid was concentrated under reduced pressure using a rotary evaporator to obtain 18.0 g of a colorless transparent liquid. The obtained colorless transparent liquid was purified by silica gel chromatography to obtain M-18. The structure of M-18 was confirmed by ¹H-NMR and ¹³C-NMR.

M-6 is a compound that provides the repeating unit K-6, M-1 is a compound that provides the repeating unit K-1, M-14 is a compound that provides the repeating unit K-14, and M-18 is a compound that provides the repeating unit K-18.

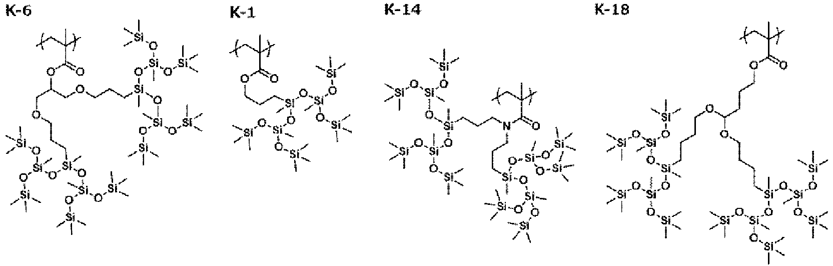

### [Synthesis of polymer]

9.0 g of cyclohexanone was put into a 200 mL three-neck flask equipped with a stirrer, a cooling pipe, a nitrogen introduction pipe, and a thermometer, and the internal temperature was set to 92°C and replaced with nitrogen. A solution obtained by mixing 12.0 g of the above-described monomer M-1 that provides the repeating unit K-1, 8.0 g of a monomer that provides the repeating unit H-3, 0.4 g of dimethyl 2,2'-azobis(isobutyrate) (manufactured by FUJIFILM Wako Pure Chemical Corporation), and 21.0 g of cyclohexanone was added dropwise thereto over 2 hours. After completion of the dropwise addition, a mixed solution of 0.4 g of dimethyl 2,2'-azobis(isobutyrate) and 6.0 g of cyclohexanone was added thereto, and the mixture was stirred at an internal temperature of 105°C for 3 hours to obtain a polymer B-1. The weight-average molecular weight was 22,000, and the molecular weight distribution was 2.4 (calculated in terms of polystyrene under measurement conditions of an eluant of THF, a flow rate of 0.35 ml/min, and a temperature of 40°C by gel permeation chromatography (EcoSEC HLC-8320GPC (manufactured by Tosoh Corporation)), and the columns used were TSKgel SuperHZM-H, TSKgel SuperHZ4000, and TSKgel SuperHZ200 (manufactured by Tosoh Corporation)).

Polymers B-2 to B-14 and C-1 were obtained according to the method for synthesizing the polymer B-1, except that the type and composition of the monomer were changed such that the polymers shown in Table 2 below were obtained. The polymers B-1 to B-14 are specific compounds, and the polymer C-1 is a comparative compound. The structures of the respective polymers are as follows, and the composition of each repeating unit in each polymer is as shown in Table 2 below. In the repeating unit represented by H-12, n is 9.

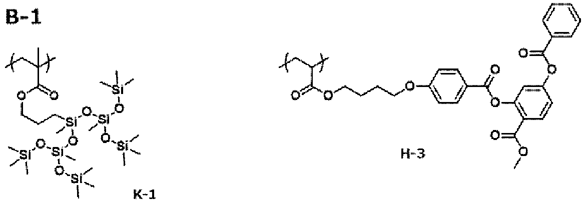

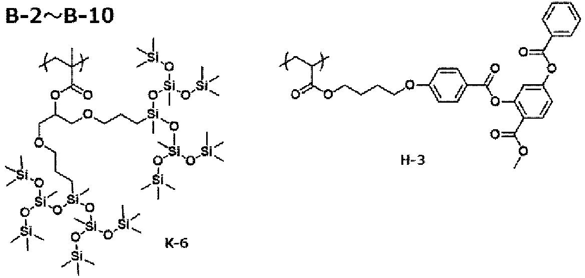

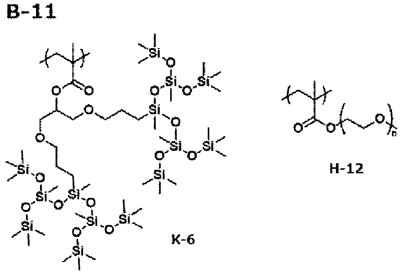

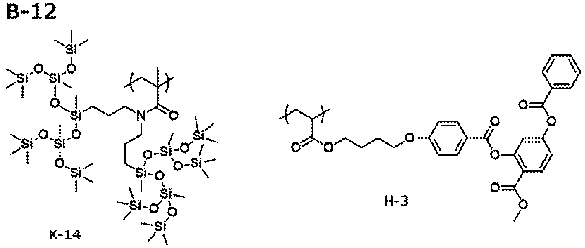

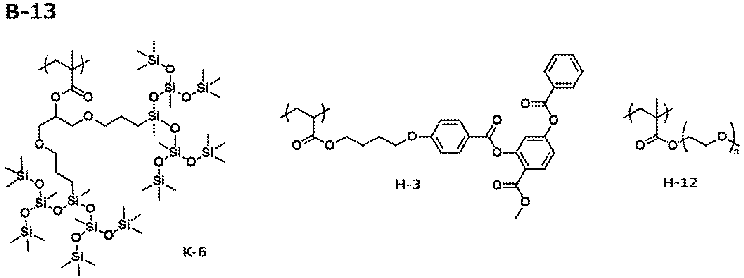

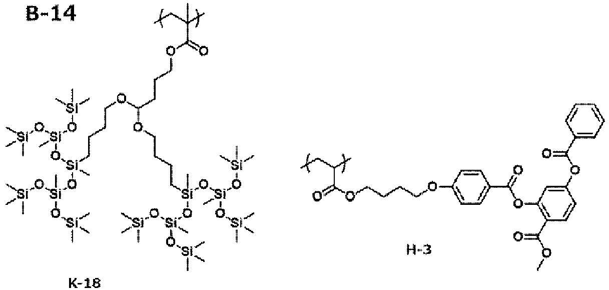

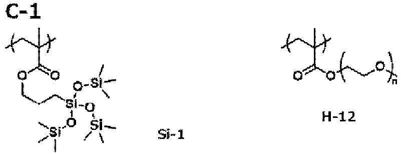

### [Evaluation]

The leveling ability of the specific compound, the compatibility of the specific compound with the liquid crystal compound, the wind unevenness of the film formed of the composition, and the aligning properties of the optically anisotropic layer formed of the composition were evaluated by the following evaluation methods.

### [Leveling ability]

Each specific compound or comparative compound shown in Table 2 was diluted to 0.08% by weight with cyclohexanone/methyl ethyl ketone = 4/1 (weight ratio). The obtained diluted solution was measured twice for the static surface tension with a static surface tensiometer (model number: CBVP-Z) manufactured by Kyowa Interface Science Co., Ltd., and the average value of the two measurements was evaluated according to the following evaluation standard. The lower the surface tension of the solution, the more excellent the leveling ability of the compound.
A: less than 25.5 mN/m
B: 25.5 mN/m or more and less than 26.5 mN/m
C: 26.5 mN/m or more and less than 27.5 mN/m
D: 27.5 mN/m or more

### [Compatibility]

The absorbance of the composition (1) having the composition shown in Table 1 at a wavelength of 660 nm was measured using an ultraviolet-visible-near infrared spectrophotometer (model number: UV-2600) manufactured by Shimadzu Corporation, and evaluated according to the following evaluation standard. A composition having a composition obtained by removing the specific compound and the comparative compound from the composition (1) was used as a reference. The measurement conditions were set as follows: a cell length of 10 mm, a measurement wavelength range of 500 to 700 nm, a high scan speed, a sampling pitch of 1 nm, and a slit width of 1 mm. As the absorbance is smaller, the compatibility between the liquid crystal compound and the specific compound is more excellent.
A: less than 0.03
B: 0.03 or more and less than 0.06
C: 0.06 or more and less than 0.15
D: 0.15 or more

**[Table 1]**

| | Parts by mass |
|---|---|
| Liquid crystal compound G1 | 80 |
| Precipitation inhibitor compound H1 | 17 |
| Precipitation inhibitor compound H2 | 3 |
| Crosslinking agent C1 | 4 |
| Photopolymerization initiator I1 | 3 |
| Left-handed chiral agent L1 | 0.48 |
| Light-handed chiral agent R1 | 0.43 |
| Specific compound or comparative compound | 0.08 |
| Methyl isobutyl ketone | 72 |
| Ethyl propionate | 72 |

| | |
|---|---|
| · Liquid crystal compound G1: a mixture of the following liquid crystal compounds (RA), (RB), and (RC) at a mass ratio of 84:14:2 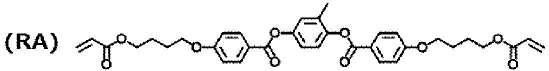 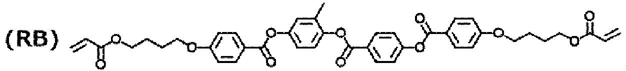 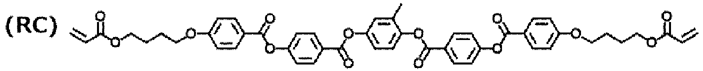 · Precipitation inhibitor compound H1: the following compound 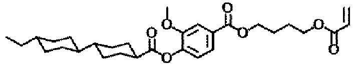 · Precipitation inhibitor compound H2: the following compound 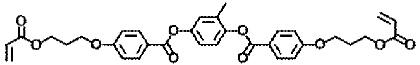 · Crosslinking agent C1: ethylene oxide-modified trimethylolpropane triacrylate (V # 360, manufactured by Osaka Organic Chemical Industry Ltd.) · Photopolymerization initiator I1: Ominirad. 819 (manufactured by IGM Resins B.V.) · Left-handed chiral agent L1: the following compound. | |

Bu represents a butyl group.

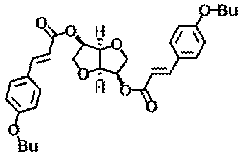

· Right-handed chiral agent R1: the following compound

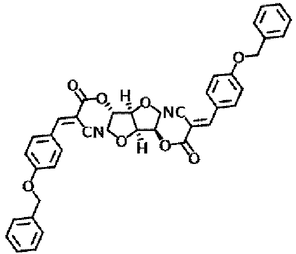

### [Wind unevenness]

The composition (1) obtained in the evaluation of [Compatibility of composition] was applied onto a substrate (30 cm × 18 cm) subjected to a rubbing treatment using a #4.2 wire bar. For 5 to 10 seconds after the application, a wind of 1.5 m/s was blown onto the surface of the coating film using an air gun to forcibly generate wind unevenness. Thereafter, the coating film was heated at 95°C for 100 seconds and irradiated with ultraviolet rays (100 mW, 200 mJ) using a metal halide lamp to obtain an optical film having an optically anisotropic layer formed from the composition on the substrate.

Two polarizing plates were overlapped on a sharkasten in a crossed nicols state, the obtained optical film was interposed between the two polarizing plates, and light was transmitted from the sharkasten to observe wind unevenness. In practical use, the wind unevenness is preferably evaluated as C or higher.
A: Wind unevenness was not visible at all.
B: Wind unevenness was slightly visible, but was not noticeable.
C: Wind unevenness was slightly visible, but there was no problem in practical use.
D: Wind unevenness was clearly visible.

### [Aligning properties]

In a polarizing microscope in a crossed nicols state, the optically anisotropic layer in the optical film obtained by the above-described evaluation method of [Wind unevenness] was randomly observed in 10 visual fields (visual field size: 1715 × 1280 µm) at a magnification of 50 times, and each visual field was classified into the following three categories.
I: No optical defects are observed.
II: some optical defects were observed, but it was at a level in which there was no problem in practical use.
III: many optical defects were observed, and it was a level in which there was a problem in practical use.

The aligning properties of the optically anisotropic layer were evaluated based on the classification in the 10 visual fields according to the following evaluation standard.
A: All of the 10 visual fields were I or II, and the number of visual fields of II was 0 to 2.
B: All of the 10 visual fields were I or II, and the number of visual fields of II was 3 to 5.
C: All of the 10 visual fields were I or II, and the number of visual fields of II was 6 to 10.
D: The 10 visual fields included III in 1 or more visual fields.

### [Results]

The structures of the specific compounds and the comparative compounds, and the evaluation results are shown in Table 2.

**[Table 2]**

| | Specific compound | Repeating unit 1 | Repeating unit 1 | Repeating unit 1 | Composition | Mw | Leveling ability | Compatibility | Wind unevenness | Aligning properties |
|---|---|---|---|---|---|---|---|---|---|---|
| | | | | | % by mass | | | | | |
| Example 1 | B-1 | K-1 | H-3 | - | 60/40 | 22000 | B | A | B | A |
| Example 2 | B-2 | K-6 | H-3 | - | 60/40 | 21200 | A | A | A | A |
| Example 3 | B-3 | K-6 | H-3 | - | 60/40 | 4800 | C | A | C | A |
| Example 4 | B-4 | K-6 | H-3 | - | 60/40 | 5300 | B | A | B | A |
| Example 5 | B-5 | K-6 | H-3 | - | 60/40 | 98000 | A | A | A | A |
| Example 6 | B-6 | K-6 | H-3 | - | 60/40 | 104000 | A | C | A | C |
| Example 7 | B-7 | K-6 | H-3 | - | 28/72 | 25000 | C | A | C | A |
| Example 8 | B-8 | K-6 | H-3 | - | 32/68 | 26800 | A | A | A | A |
| Example 9 | B-9 | K-6 | H-3 | - | 68/32 | 27100 | A | A | A | A |
| Example 10 | B-10 | K-6 | H-3 | - | 73/27 | 25300 | A | C | A | C |
| Example 11 | B-11 | K-6 | H-12 | - | 60/40 | 22000 | A | B | A | B |
| Example 12 | B-12 | K-14 | H-3 | - | 60/40 | 18000 | B | A | B | A |
| Example 13 | B-13 | K-6 | H-3 | H-12 | 60/30/10 | 28000 | A | A | A | B |
| Example 14 | B-14 | K-18 | H-3 | - | 60/40 | 24000 | A | A | A | A |
| Comparative Example 1 | C-1 | Si-1 | H-12 | | 60/40 | 20000 | D | C | D | D |

From the results shown in Table 2, it was confirmed that the composition according to the embodiment of the present invention can form a film with less wind unevenness.

In addition, from the results shown in Table 2, it was also confirmed that the polymer according to the embodiment of the present invention has an excellent leveling ability. In addition, it was also confirmed that the composition according to the embodiment of the present invention can form an optically anisotropic layer having excellent aligning properties.

From the comparison of Examples 1, 2, and 12, it was confirmed that in a case where p in Formula (1) was 2 or more, the leveling ability of the specific compound was more excellent, and a film in which the wind unevenness was further suppressed could be formed.

From the comparison of Examples 2 to 6, it was confirmed that in a case where the weight-average molecular weight of the specific compound was 5,000 or more, the leveling ability of the specific compound was more excellent, and a film in which the wind unevenness was further suppressed could be formed, and in a case where the weight-average molecular weight of the specific compound was 8,000 or more, the leveling ability of the specific compound was even more excellent, and a film in which the wind unevenness was further suppressed could be formed. In addition, it was confirmed that in a case where the weight-average molecular weight of the specific compound was 100,000 or less, the leveling ability of the specific compound was more excellent, and a film in which the wind unevenness was further suppressed could be formed.

From the comparison of Examples 2 and 7 to 10, it was confirmed that in a case where the content of the repeating unit represented by Formula (1) was 30% by mass or more with respect to all repeating units of the specific polymer, the leveling ability of the specific compound was more excellent, and a film in which the wind unevenness was further suppressed could be formed, and in a case where the content of the repeating unit represented by Formula (1) was 70% by mass or less, the compatibility of the specific compound with the liquid crystal compound was more excellent, and the aligning properties of the optically anisotropic layer to be obtained were more excellent.

From the comparison of Examples 2 and 11, it was confirmed that in a case where Rk in the repeating unit represented by Formula (2) was a group having a ring structure, the compatibility of the specific compound with the liquid crystal compound was more excellent, and the aligning properties of the optically anisotropic layer to be obtained were more excellent.

From the comparison of Examples 2 and 13, it was confirmed that in a case where the content of the repeating unit represented by Formula (2), in which Rk was a group having a ring structure, was 80% by mass or more with respect to the repeating unit represented by Formula (2), the aligning properties of the optically anisotropic layer to be obtained were more excellent.

## Claims

1. A composition comprising:
a compound having a group represented by Formula (Rs); and
a liquid crystal compound, 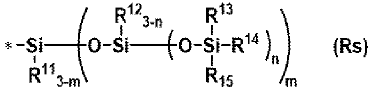
in Formula (Rs), R¹¹ and R¹² each independently represent a hydrogen atom, an alkyl group, or an aryl group,
R¹³, R¹⁴, and R¹⁵ each independently represent an alkyl group or an aryl group,
n's each independently represent 2 or 3,
m represents 2 or 3, and
* represents a bonding position.

2. The composition according to claim 1,
wherein the compound having the group represented by Formula (Rs) includes a repeating unit represented by Formula (1), 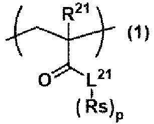
in Formula (1), R²¹ represents a hydrogen atom or a methyl group,
L²¹ represents a (p+1)-valent linking group,
Rs's each independently represent the group represented by Formula (Rs),
p represents an integer of 1 or more.

3. The composition according to claim 1 or 2,
wherein the compound having the group represented by Formula (Rs) includes a repeating unit represented by Formula (2), 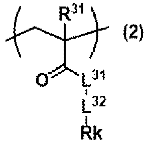
in Formula (2), R³¹ represents a hydrogen atom or a methyl group,
L³¹ represents -O- or -NR^{N}-, R^{N} represents a hydrogen atom or a substituent,
L³² represents a single bond or a divalent linking group, and
Rk represents a group selected from the group consisting of a group having a ring structure, a group having a poly(alkyleneoxy) group, and a hydroxyl group.

4. The composition according to claim 1 or 2,
wherein a weight-average molecular weight of the compound having the group represented by Formula (Rs) is 5,000 to 100,000.

5. The composition according to claim 2,
wherein a content of the repeating unit represented by Formula (1) is 30% to 70% by mass with respect to all repeating units of the compound having the group represented by Formula (Rs).

6. A film formed by immobilizing an alignment state of the liquid crystal compound in the composition according to claim 1 or 2.

7. An optical film comprising:
the film according to claim 6.

8. A polarizing plate comprising:
the optical film according to claim 7; and
a polarizer.

9. An image display device comprising:
the optical film according to claim 7.

10. A polymer comprising:
a repeating unit represented by Formula (1); and
a repeating unit represented by Formula (2),
wherein a weight-average molecular weight of the polymer is 5,000 to 100,000, 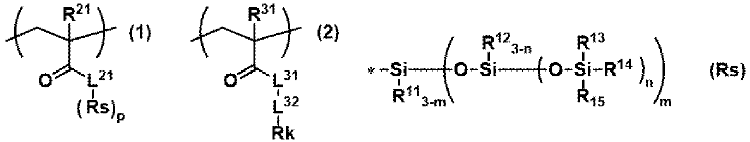
in Formula (1), R²¹ represents a hydrogen atom or a methyl group,
L²¹ represents a (p⁺1)-valent linking group,
Rs's each independently represent a group represented by Formula (Rs),
p represents an integer of 1 or more,
in Formula (2), R³¹ represents a hydrogen atom or a methyl group,
L³¹ represents -O- or -NR^{N}-, R^{N} represents a hydrogen atom or a substituent,
L³² represents a single bond or a divalent linking group,
Rk represents a group selected from the group consisting of a group having a ring structure, a group having a poly(alkyleneoxy) group, and a hydroxyl group,
in Formula (Rs), R¹¹ and R¹² each independently represent a hydrogen atom, an alkyl group, or an aryl group,
R¹³, R¹⁴, and R¹⁵ each independently represent an alkyl group or an aryl group,
n's each independently represent 2 or 3,
m represents 2 or 3, and
* represents a bonding position.

11. A compound comprising:
at least one group selected from the group consisting of a group represented by Formula (Rfc2), a group represented by Formula (Rfc3), and a group represented by Formula (Rfn2), 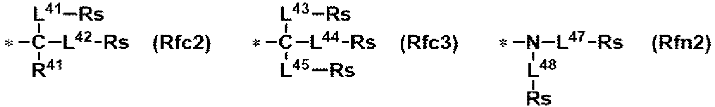 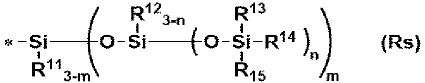
in Formula (Rfc2), Formula (Rfc3), and Formula (Rfn2), L⁴¹, L⁴², L⁴³, L⁴⁴, L⁴⁵, L⁴⁷, and L⁴⁸ each independently represent a divalent linking group,
R⁴¹ represents a hydrogen atom, an alkyl group, or an aryl group,
Rs's each independently represent a group represented by Formula (Rs),
in Formula (Rs), R¹¹ and R¹² each independently represent a hydrogen atom, an alkyl group, or an aryl group,
R¹³, R¹⁴, and R¹⁵ each independently represent an alkyl group or an aryl group,
n's each independently represent 2 or 3,
m represents 2 or 3, and
* represents a bonding position.
